# FASCICULE DE BREVET EUROPEEN

(11) **EP 4 639 095 B1**
(45) Date de publication et mention de la délivrance du brevet: **04.11.2026**
(21) Numéro de dépôt: 23822316.8
(22) Date de dépôt: 11.12.2023
(51) Int. Cl.: G01D 5/353, G01D 18/00

(54) **DISPOSITIF DE MESURE DE LA SENSIBILITÉ D'UN GUIDE D'ONDE À UNE VARIATION D'UNE GRANDEUR PHYSIQUE**
VORRICHTUNG ZUR MESSUNG DER EMPFINDLICHKEIT EINES WELLENLEITERS AUF EINE VERÄNDERUNG EINER PHYSIKALISCHEN GRÖSSE
DEVICE FOR MEASURING THE SENSITIVITY OF A WAVEGUIDE TO A VARIATION OF A PHYSICAL QUANTITY

(30) Priorité: 19.12.2022 FR 2213856
(43) Date de publication de la demande: 29.10.2025
(73) Titulaire: Commissariat à l'Energie Atomique et aux Energies Alternatives, 75015 Paris (FR)
(72) Inventeur: COTILLARD, Romain, 91191 Gif-sur-Yvette Cedex (FR); ROUSSEL, Nicolas, 91191 Gif-sur-Yvette Cedex (FR); LERNER, Alexandre, 91191 Gif-sur-Yvette Cedex (FR); BLANCHET, Thomas, 91191 Gif-sur-Yvette Cedex (FR)
(74) Mandataire: INNOV-GROUP
(86) Numéro de dépôt international: PCT/EP2023/085147
(87) Numéro de publication internationale: WO 2024/132641

(56) Documents cités:
- CN-A- 102 879 022
- SHEN FANGCHENG ET AL: "Enhanced Bragg Resonances in Small Period Long Period Fiber Grating Fabricated with Femtosecond Laser Line by Line Technique", 2021 19TH INTERNATIONAL CONFERENCE ON OPTICAL COMMUNICATIONS AND NETWORKS (ICOCN), IEEE, 23 August 2021 (2021-08-23), pages 1 - 3, XP033991294, DOI: 10.1109/ICOCN53177.2021.9563726
- CHANET N ET AL: "Design and integration of femtosecond Fiber Bragg gratings temperature probes inside actively cooled ITER-like plasma-facing components", FUSION ENGINEERING AND DESIGN, ELSEVIER SCIENCE PUBLISHERS, AMSTERDAM, NL, vol. 166, 9 April 2021 (2021-04-09), XP086540615, ISSN: 0920-3796, [retrieved on 20210409], DOI: 10.1016/J.FUSENGDES.2021.112376

## Description

L'invention concerne un dispositif et un procédé de mesure de la sensibilité S_{G} d'un guide d'onde à une variation ΔG d'une grandeur physique G. L'invention concerne également un procédé de calibration d'un dispositif de mesure de la grandeur physique G.

Des dispositifs connus de mesure de la grandeur physique G comporte une fibre optique dans le cœur de laquelle est réalisé au moins un réseau de Bragg dont la longueur d'onde fondamentale λ_{B} varie en fonction de la grandeur physique. Pour convertir une variation de la longueur d'onde λ_{B} en une valeur courante G_{c} de la grandeur physique G, une loi d'étalonnage est utilisée. Cette loi d'étalonnage permet de convertir chaque variation Δλ_{B} mesurée de la longueur d'onde λ_{B} en une valeur mesurée Gₘ correspondante. Cette loi d'étalonnage dépend de la longueur d'onde λ_{B} et des matériaux utilisés pour fabriquer la fibre optique.

A ce jour, pour construire cette loi d'étalonnage, le réseau de Bragg est exposé à grand nombre de valeurs Gᵢ connues de la grandeur physique G et pour chacune de ces valeurs connues, la valeur λ_{B,i} de la longueur d'onde λ_{B} est mesurée. On obtient ainsi un ensemble de points de coordonnées (λ_{B,i}, Gᵢ). Ensuite, les coefficients d'un polynôme qui passe au plus près de ces points sont calculés. C'est ce polynôme ainsi calculé qui est ensuite utilisé comme loi d'étalonnage du dispositif de mesure.

Un tel procédé de calibration est long à mettre en œuvre. Par exemple, dans le cas où le dispositif de mesure comporte plusieurs réseaux de Bragg multiplexés en longueur d'onde et réalisés dans la même fibre optique, ce procédé de calibration doit être répété pour chacun de ces réseaux de Bragg car ils correspondent chacun à une longueur d'onde fondamentale λ_{B} différente de celles des autres réseaux de Bragg.

Pour remédier à ces inconvénients, les inventeurs ont proposé de construire la loi d'étalonnage à partir de mesures de la sensibilité S_{G} de la fibre optique aux variations ΔG de la grandeur physique G. La sensibilité S_{G} est définie par la relation suivante Δλ_{B}/λ_{B} = S_{G}*ΔG, où :
- λ_{B} est la longueur d'onde fondamentale d'un réseau de Bragg réalisé dans la fibre optique, et
- Δλ_{B} est la variation de la longueur d'onde fondamentale du réseau de Bragg obtenue en réponse à la variation ΔG de la grandeur physique, et
- ΔG est une variation infinitésimale de la valeur de la grandeur physique G autour d'une valeur courante donnée de la grandeur physique G.
Il est souligné ici, que cette définition est donnée dans le cas d'une variation infinitésimale de la grandeur G autour d'une valeur courante donnée car cette définition reste alors vraie même si la valeur de la sensibilité S_{G} varie en fonction de cette valeur courante. Une variation infinitésimale est une variation dix ou cent ou mille fois plus petite que la largeur de la plage d'utilisation à l'intérieur de laquelle la valeur de la grandeur physique G varie.

Dans ce dernier cas, il est avantageux de disposer d'un procédé de mesure précis de cette sensibilité S_{G}.

De l'état de la technique est également connu de :
- Shen Fangcheng et Al : « Enhanced Bragg Resonances in Small Period Long Period Fiber Grating Fabricated with Femtosecond Laser Line by Line Technique », 19th Int, Conf. On Optical Comm. And Networks (ICOCN), IEEE, 23/08/2021, pages 1-3,
- Chanet N et Al : « Design and integration of femtosecond Fiber Bragg gratings temperature probes inside actively cooled ITER-like plasma-facing components », Fusion Engineering and Design, Elsevier Science Pub. Vol. 166, 9/04/2021.

L'invention vise donc à proposer un tel procédé de mesure de la sensibilité S_{G}.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un dispositif de mesure d'une grandeur physique G,
- la figure 2 est un organigramme d'un procédé de calibration du dispositif de la figure 1 et de mesure de la grandeur physique G à l'aide de ce dispositif de la figure 1,
- la figure 3 est une illustration schématique d'un dispositif de mesure de la sensibilité d'un guide d'onde à une variation ΔG de la grandeur physique G,
- la figure 4 est une illustration schématique, partielle et en coupe longitudinale, d'un réseau de Bragg utilisé dans le dispositif de la figure 3,
- la figure 5 est une illustration schématique, en coupe transversale, d'un motif du réseau de Bragg de la figure 4,
- la figure 6 est un graphe représentant une portion du spectre de puissance du réseau de Bragg de la figure 4,
- la figure 7 est un organigramme d'un procédé de fabrication du réseau de Bragg de la figure 4,
- la figure 8 est un organigramme d'un procédé de mesure de la sensibilité d'un guide d'onde à une variation ΔG de la grandeur physique G à l'aide du dispositif de la figure 3.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description des exemples détaillés de modes de réalisation sont d'abord décrits dans un chapitre I en référence aux figures. Ensuite, dans un chapitre **II,** des variantes de ces modes de réalisation sont introduits. Enfin, les avantages des différents modes de réalisation sont précisés dans un chapitre III.

### Chapitre I : Exemple de modes de réalisation

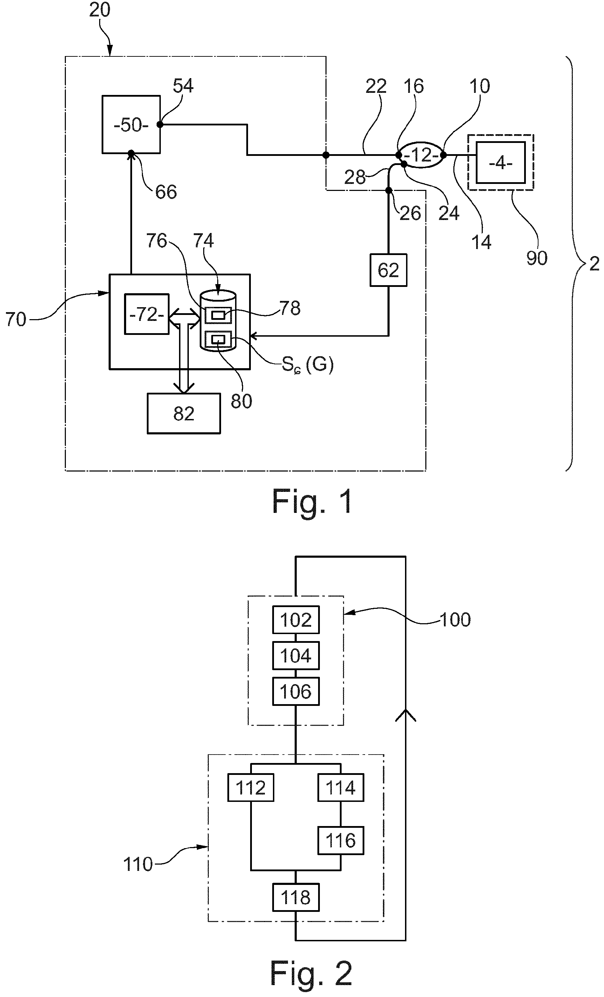

La figure 1 représente un dispositif 2 de mesure d'une grandeur physique G. A cet effet, le dispositif 2 comporte un réseau 4 de Bragg. Le réseau 4 est exposé aux variations de la grandeur physique G. Dans cet exemple de réalisation, le dispositif 2 est décrit dans le cas particulier où la grandeur physique G est mesurée à un seul emplacement et donc dans le cas particulier où le dispositif 2 utilise un seul réseau de Bragg.

Le réseau 4 transforme une variation de la grandeur physique G en un déplacement d'un pic de puissance de son spectre de puissance.

Dans ce texte, à défaut d'indication contraire, le terme « spectre de puissance » ou « spectre » désigne le spectre de puissance en réflexion. Le spectre de puissance en réflexion est le spectre de puissance du signal optique réfléchi par un composant optique. Un pic dans le spectre de puissance en réflexion correspond à une raie d'absorption dans le spectre de puissance en transmission du même composant optique.

Le spectre de puissance du réseau 4 comporte, par exemple, un seul pic de puissance dans une plage de travail prédéterminée. Cette plage de travail a une largeur supérieure à 5 nm. Typiquement, sa largeur est également inférieure ou égale à 200 nm ou 120 nm. La plage de travail est située à l'intérieur du domaine de l'optique. Le domaine de l'optique désigne la plage contenant les longueurs d'onde habituellement utilisées en optique. Plus précisément, dans ce texte, le domaine de l'optique désigne la plage qui s'étend de 200 nm à 10000 nm et, fréquemment, de 200 nm à 5000 nm ou de 400 nm à 2000 nm.

Ici, le pic de puissance du réseau 4 est situé, dans la plage de travail, à la longueur d'onde fondamentale λ_{B} du réseau 4. La longueur d'onde fondamentale λ_{B} correspondant à la fréquence fondamentale f_{B} de ce réseau 4. Dans ce texte, la longueur d'onde fondamentale λ_{B} d'un réseau de Bragg est la longueur d'onde correspondant à la fréquence fondamentale f_{B} de résonance de ce réseau de Bragg. Cette longueur d'onde λ_{B} est définie par la relation suivante : λ_{B} = 2*nₑ*Λ, où :
- nₑ est l'indice effectif du guide d'onde dans lequel est réalisé ce réseau de Bragg,
- Λ est le pas du réseau de Bragg, et
- le symbole « * » désigne l'opération de multiplication scalaire dans ce texte.

L'indice effectif nₑ de propagation est aussi connu sous le nom de « constante de phase du mode ». Il est défini par la relation suivante : n_{g} = nₑ - λdnₑ/dλ, où n_{g} est l'indice de groupe et λ est la longueur d'onde du signal optique guidé par le guide d'onde. L'indice effectif de propagation d'un guide d'onde dépend des dimensions du cœur de ce guide d'onde et des matériaux formant ce cœur et la gaine optique de ce guide d'onde. Il peut être déterminé expérimentalement ou par simulation numérique.

La longueur d'onde λ_{B} varie classiquement en fonction des grandeurs physiques suivantes auxquels le réseau 4 peut être exposé : la température, une déformation longitudinale et une pression hydrostatique. Une « déformation longitudinale » désigne ici une déformation du réseau 4 qui l'étire ou le rétrécit dans une direction parallèle à la direction de propagation du signal optique qui le traverse. Ainsi, le réseau 4 permet de mesurer l'une de ces grandeurs physiques. Par la suite, le dispositif 2 est décrit dans le cas particulier où la grandeur physique G mesurée est la température.

Le réseau 4 est réalisé dans un guide d'onde 14. Le réseau 4 est optiquement raccordé à un port 10 d'entrée/sortie d'un coupleur optique 12 par l'intermédiaire du guide d'onde 14. Le coupleur optique 12 comporte :
- un port 16 d'entrée optiquement raccordé à un port 18 de sortie d'un analyseur spectral 20 par l'intermédiaire d'un guide d'onde 22, et
- un port 24 de sortie optiquement raccordé à un port 26 d'entrée de l'analyseur spectral 20 par l'intermédiaire d'un guide d'onde 28.

Dans ce mode de réalisation, tous les guides d'onde ci-dessus sont des fibres optiques respectives. Ainsi, par la suite, les mêmes références numériques sont utilisées pour désigner le guide d'onde ou la fibre optique. Ici, les fibres optiques utilisées sont des fibres optiques monomodes dans la plage de travail. Ces fibres optiques sont également connues sous l'acronyme SMF (« Single Mode Fiber »).

L'analyseur spectral 20 est capable de mesurer la réponse spectrale du réseau 4 puis d'établir la valeur courante G_{c} de la grandeur physique G à partir de cette réponse spectrale mesurée. Pour cela, il comporte :
- une source optique 50 comportant un port 54 de sortie optiquement raccordé au port de sortie 18,
- un capteur optique 62 optiquement raccordé au port d'entrée 26 pour mesurer la puissance du signal optique reçu sur ce port d'entrée, et
- une unité électronique 70 de traitement électriquement raccordée au capteur 62 pour recevoir le signal électrique représentatif de la puissance du signal optique mesuré par le capteur 62.

Dans ce mode de réalisation, la source 50 est une source laser accordable. Cette source 50 émet, en direction du réseau 4, un signal optique mono-fréquence par l'intermédiaire du port 54. La longueur d'onde λₛ du signal optique émis est dans le domaine de l'optique. La valeur de la longueur d'onde λₛ dépend d'un signal de commande reçu sur un port 66 de commande de la source 50. Plus précisément, la longueur d'onde λₛ est reliée à la valeur du signal de commande par une fonction de transfert qui, à chaque valeur du signal de commande, associe une valeur correspondante de la longueur d'onde λₛ. Une telle source 50 est également appelée « source laser à balayage ». En effet, moyennant l'utilisation d'un signal de commande approprié, la longueur d'onde λₛ balaye toute la plage de travail. Ce signal de commande approprié est, par exemple, généré par l'unité 70. Ici, la plage de travail est une plage de longueurs d'onde qui s'étend d'une longueur d'onde λₛₘᵢₙ jusqu'à une longueur d'onde λₛₘₐₓ. Dans ce mode de réalisation, la largeur de la plage de travail et ses limites sont typiquement imposées par les caractéristiques de la source 50. La largeur de la plage de travail est égale à la différence λₛₘₐₓ - λₛₘᵢₙ. A titre d'exemple, ici, cette plage de travail s'étend de 1460 nm à 1620 nm.

Le capteur 62 mesure le signal optique rétro-diffusé par le réseau 4. Par exemple, le capteur 62 est une photodiode. Le capteur 62 présente une plage spectrale d'observation qui englobe la plage de travail.

Dans cet exemple de réalisation, l'unité 70 est notamment configurée pour :
- déterminer une valeur Δλ_{c} d'une variation Δλ de la longueur d'onde du pic du réseau 4 par rapport à une valeur λ_{B,0} de référence, à partir de la réponse spectrale du réseau 4 mesurée par le capteur 62, puis
- établir une valeur courante G_{c} de la grandeur physique G à partir de la valeur Δλ_{c} déterminée.
La variation Δλ est définie par la relation suivante : Δλ = λ_{c} - λ_{B,0}, où :
- λ_{c} est la valeur courante de la longueur d'onde λ_{B} du réseau 4 lorsque la valeur de la grandeur physique G est égale à la valeur courante G_{d}, et
- la valeurs λ_{B,0} est la valeur de la longueur d'onde λ_{B} du réseau 4 lorsque la valeur de la grandeur physique G est égale à une valeur connu G₀ de référence.

Pour réaliser ces opérations, l'unité 70 comporte un microprocesseur programmable 72 et une mémoire 74 contenant les données et les instructions nécessaires au fonctionnement de l'analyseur spectral 20.

En particulier, la mémoire 74 comporte les valeurs λ_{B,0} et G₀ de référence. De plus, la mémoire 74 comporte une loi 76 d'étalonnage qui permet d'établir la valeur courante G_{c} de la grandeur physique G à partir de la valeur déterminée λ_{c} de la longueur d'onde à laquelle se produit le pic du réseau 4. Pour cela, dans cet exemple de réalisation, la loi d'étalonnage 76 permet d'établir la valeur courante G_{c} de la grandeur physique G à partir de la valeur Δλ_{c} déterminée de la variation Δλ. Ainsi, ici, la loi 76 est une fonction pré-enregistrée qui admet comme paramètre d'entrée la valeur Δλ_{c} déterminée et qui renvoie, en réponse, la valeur courante G_{c} correspondante à cette valeur Δλ_{c}. Par exemple, dans ce mode de réalisation, la loi 76 comporte à cet effet une table 78 qui associe à N₇₆ valeurs possibles Δλᵢ de la variation Δλ, une valeur correspondante Gᵢ de la grandeur physique G. L'indice i est un identifiant de la valeur Gᵢ. Le nombre N₇₆ est le nombre de points de coordonnés (Δλᵢ, Gᵢ) contenus dans la table 78. Le nombre N₇₆ est supérieur à trois et, de préférence, supérieur à dix ou trente ou cent. Typiquement, les points de coordonnés (Δλᵢ, Gᵢ) sont uniformément répartis sur toutes la plage d'utilisation [Gₘᵢₙ, Gₘₐₓ] du dispositif 2 de mesure, où Gₘᵢₙ et Gₘₐₓ sont, respectivement, la valeur minimale et la valeur maximale de la grandeur physique G qui peuvent être mesurées par le dispositif 2. Ces valeurs Gₘᵢₙ et Gₘₐₓ sont des valeurs prédéfinies, typiquement, par le constructeur du dispositif 2. Ici, le nombre N₇₆ est déterminé pour que l'écart entre deux valeurs Gᵢ immédiatement consécutives soit inférieur à 10°C ou à 1°C. Ici, les valeurs Gᵢ sont classées par ordre croissant de sorte que, quel que soit l'indice i supérieur à zéro, la valeur Gᵢ est comprise entre les valeurs Gᵢ₋₁ et Gᵢ₊₁.

Dans ce mode de réalisation, si la valeur Δλ_{c} fournie en tant que paramètre d'entrée de la loi 76 est située entre deux valeurs Δλᵢ contenues dans la table 78, la loi 76 détermine la valeur G_{c} à retourner par interpolation linéaire entre les deux points de la table 78 les plus proches de la valeur Δλ_{c} fournie.

De plus, dans ce mode de réalisation, la mémoire comporte une loi S_{G}(G) d'évolution de la sensibilité S_{G} de la fibre 14 en fonction de la valeur courante G_{c} de la grandeur physique G. Comme expliqué en référence au procédé de la figure 2, la loi S_{G}(G) permet de calibrer le dispositif 2.

La loi S_{G}(G) est une fonction qui renvoie la valeur courante S_{G,c} de la sensibilité S_{G} correspondant à la valeur courante G_{c} de la grandeur physique G fournie en tant que paramètre d'entrée de cette loi. Par exemple, à cet effet, la loi S_{G}(G) comporte une table 80 qui associe à N_{G} valeurs G_{d} possibles de la grandeur physique G, la valeur correspondante S_{G,d} de la sensibilité S_{G}, où l'indice d est un identifiant de la valeur G_{d}. Le nombre N_{G} est le nombre de points de coordonnés (G_{d}, S_{G,d}) contenus dans la table 80. Le nombre N_{G} est supérieur à deux ou trois et, de préférence, supérieur à quatre ou dix. Typiquement, le nombre N_{G} est inférieur au nombre N₇₆ et, de préférence, deux ou quatre ou dix fois inférieur au nombre N₇₆. Les valeurs G_{d} ne sont pas nécessairement les mêmes que les valeurs Gᵢ de la grandeur physique G. De préférence, les points de coordonnés (G_{d}, S_{G,d}) sont uniformément répartis sur toute la plage d'utilisation [Gₘᵢₙ, Gₘₐₓ] du dispositif 2 de mesure.

De façon similaire à ce qui a été décrit dans le cas de la loi 76, ici, si la valeur courante G_{c} fournie en tant que paramètre d'entrée de la loi 76 est située entre deux valeurs G_{d} contenues dans la table 80, la loi S_{G}(G) détermine la valeur S_{G,c} à retourner par interpolation linéaire entre les deux points de la table 80 les plus proches de la valeur G_{c} fournie.

L'unité 70 est également raccordée à une interface homme-machine 82 pour communiquer le résultat des mesures réalisées à un être humain et, en alternance, acquérir de nouvelles valeurs λ_{B,0}, G₀ de référence.

Enfin, de préférence, le dispositif 2 comporte une structure isolante 90 qui isole le réseau 4 des variations des autres grandeurs physiques qui peuvent faire varier sa longueur d'onde λ_{B}. Ainsi, ici, la structure 90 est agencée pour maintenir constante la déformation longitudinale du réseau 4 et la pression hydrostatique. Par exemple, la structure 90 est un boîtier qui isole mécaniquement le réseau 4 des contraintes mécaniques exercées par le milieu extérieur sur le réseau 4.

Le fonctionnement du dispositif 2 va maintenant être décrit en référence au procédé de la figure 2.

Le procédé de la figure 2 débute par une phase 100 de calibration du dispositif 2.

La phase 100 débute par une étape 102 lors de laquelle l'unité 70 acquière les valeurs λ_{B,0} et G₀ de référence. Les valeurs λ_{B,0} et G₀ de référence sont, par exemple, obtenues en plaçant le réseau 4 dans un bain à la température G₀ puis en mesurant, à l'aide de l'unité 70, la valeur λ_{B,0} correspondante de la longueur d'onde λ_{B} du réseau 4. La valeur G₀ est par exemple acquise par l'intermédiaire de l'interface homme-machine 82.

Ensuite, lors d'une étape 104, l'unité 70 choisie, à l'intérieur de la plage [Gₘᵢₙ ; Gₘₐₓ], les N₇₆ valeurs Gᵢ. Ici, ces valeurs Gᵢ sont celles déjà contenues dans la table 78. Puis, pour chacune de ces valeurs Gᵢ, l'unité 70 calcule la valeur correspondante λᵢ de la longueur d'onde λ et la valeur correspondante Δλᵢ de la variation correspondante Δλ. La valeur Δλᵢ est calculée à l'aide de la relation suivante : Δλᵢ = λᵢ - λ_{B,0}. Chaque couple de valeurs Δλᵢ, Gᵢ ainsi calculé forme un point d'abscisse Δλᵢ et d'ordonné Gᵢ. Pour cela, pour chaque valeur Gᵢ, l'unité 70 calcule, par ordre d'indice i croissant, la valeur correspondante λᵢ à l'aide de la relation suivante : (λᵢ - λᵣ)/λᵣ = S_{G,i}*(Gᵢ-Gᵣ), où :
- λᵣ et Gᵣ sont égaux, respectivement, à λᵢ₋₁ et Gᵢ₋₁, λᵢ₋₁ étant la valeur de la longueur d'onde λ calculée, lors de l'itération précédente, pour la valeur Gᵢ₋₁ de la grandeur physique G, et
- S_{G,i} est égal à S_{G}(Gᵢ).
Le calcul itératif ci-dessus est initialisé en prenant λ₀ = λ_{B,0}, où λ_{B,0} et G₀ sont les valeurs de référence acquises lors de l'étape 102. Puisque les valeurs Gᵢ sont classées par ordre de valeurs, Gᵢ₋₁ est la valeur la plus proche de la valeur Gᵢ pour laquelle la valeur λᵢ₋₁ a déjà été calculée lors de cette étape 104. Cela permet d'améliorer la précision sur le calcul de la valeur λᵢ.

S_{G}(Gᵢ) est la valeur de la sensibilité de la fibre 14 associée à la valeur Gᵢ par la loi S_{G}(G) enregistrée dans la mémoire 74.

Puis, lors d'une étape 106, l'unité 70 construit une loi d'étalonnage à partir des points de coordonnées (Δλᵢ; Gᵢ) puis l'enregistre dans la mémoire 74 en tant que loi 76 d'étalonnage. Pour cela, ici, l'unité 70 enregistre, dans la table 78, chaque point de coordonnées(Δλᵢ; Gᵢ) calculé lors de l'étape 104.

A partir de ce moment là, la phase 100 de calibration du dispositif 2 est terminée et une phase 110 de mesure de la grandeur physique G débute.

Lors de la phase 110, le réseau 4 est exposé à la grandeur physique G à mesurer.

Ensuite, lors d'une étape 112, l'unité 70 commande la source 50 pour faire varier linéairement, au cours du temps, la longueur d'onde λₛ depuis la longueur d'onde λₛₘᵢₙ jusqu'à la longueur d'onde λₛₘₐₓ. A cet effet, l'unité 70 envoie à la source 50 un signal de commande généré à partir d'une estimation de la fonction de transfert de la source 50.

Le signal optique émis par la source 50 est guidé par le coupleur 12 et les fibres optiques 22 et 14 jusqu'au réseau 4. Le réseau 4 réfléchit alors une partie du signal optique incident. Cette partie réfléchie du signal optique correspond au signal rétro-diffusé par le réseau 4.

En parallèle de l'étape 112, lors d'une étape 114, le capteur 62 mesure le signal optique rétro-diffusé par le réseau 4. Plus précisément, le capteur 62 génère un signal électrique dont l'amplitude est représentative de la puissance du signal optique mesuré. Le signal électrique généré par le capteur 62 est transmis à l'unité 70 qui l'acquière.

Une fois le signal électrique acquis par l'unité 70, lors d'une étape 116, l'unité 70 détermine la valeur Δλ_{c} de la variation Δλ.

Lorsque la longueur d'onde λₛ est égale à la longueur d'onde λ_{B} du réseau 4, la puissance du signal optique rétro-diffusé par le réseau 4 passe par un maximum. Puisque la longueur d'onde λₛ varie linéairement en fonction du temps, l'instant t_{c} auquel se produit ce maximum est proportionnel à la valeur courante λ_{c} de la longueur d'onde λ_{B} à cet instant t_{c}. De même, la valeur λ_{B,0} de référence de la longueur d'onde λ_{B} correspond à un instant t₀ de référence. Lors de l'étape 116, l'unité 70 calcule l'écart entre l'instant t_{c} mesuré et l'instant t₀ de référence. Puisque la variation de la longueur d'onde λₛ au cours du temps est linéaire, l'écart t_{c}-t₀ est proportionnel à la valeur courante Δλ_{c} de la variation Δλ. Le coefficient de proportionnalité entre l'écart t_{c}-t₀ et la valeur courante Δλ_{c} est égal à la pente α_{c} de la droite représentant l'évolution au cours du temps de la longueur d'onde λₛ. Cette pente α_{c} est connue puisque le signal de commande généré est connu. Ainsi, lors de l'étape 116, l'unité 70 détermine la valeur courante Δλ_{c} de la variation Δλ à partir de l'écart mesuré entre les instants t_{c} et t₀.

Ensuite, lors d'une étape 118, l'unité 70 établit la valeur courante G_{c} de la grandeur physique G à partir de la valeur courante Δλ_{c} déterminée lors de l'étape 116. Pour cela, l'unité 70 utilise la loi 76 d'étalonnage actuellement enregistrée dans la mémoire 74. Plus précisément, lors de l'étape 118, l'unité 70 obtient, en utilisant la loi 76, la valeur G_{c} de la grandeur physique associée à la valeur Δλ_{c} fournie en tant que paramètre d'entrée à cette loi 76. Cette valeur G_{c} est alors considérée comme étant la valeur mesurée de la grandeur physique G.

Chaque valeur mesurée G_{c} de la grandeur physique G ainsi que l'instant auquel elle a été mesurée sont enregistrés dans un fichier et/ou transmis à l'interface 82 qui affiche en réponse les valeurs mesurées.

Typiquement, les étapes 112, 114, 116 et 118 sont réitérées à intervalles réguliers pour mesurer l'évolution au cours du temps de la grandeur physique G.

La précision sur la mesure de la grandeur physique G dépend, en partie, de l'exactitude de la loi S_{G}(G) utilisée par le dispositif 2 et donc de la précision avec laquelle la sensibilité S_{G} de la fibre 14 est mesurée pour différentes valeurs G_{d} de la grandeur physique.

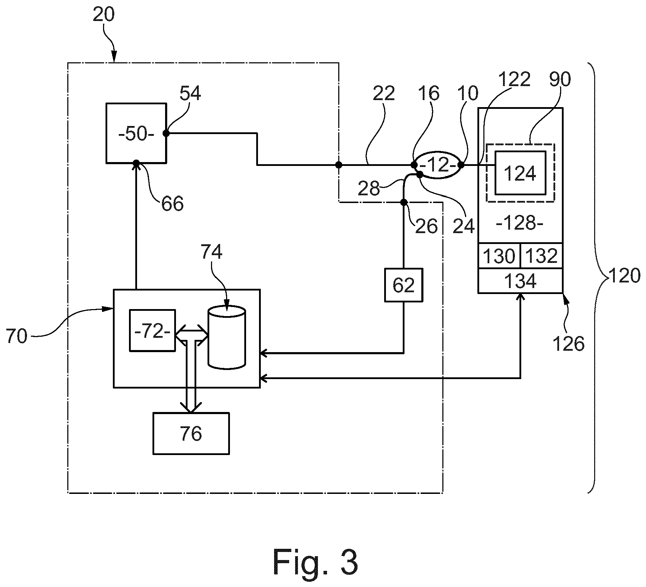

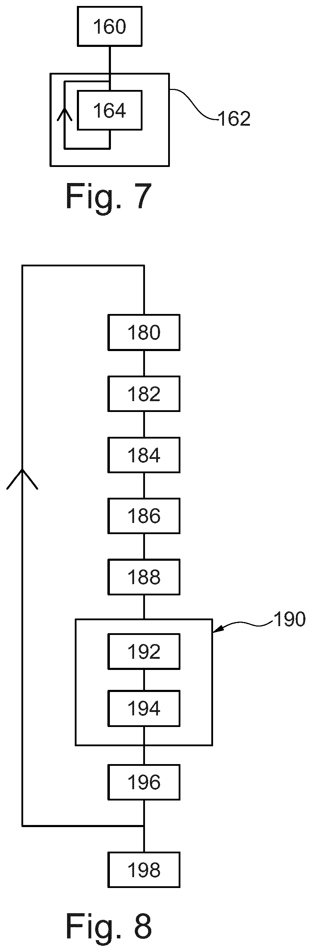

La figure 3 représente un dispositif 120 de mesure de la sensibilité S_{G} de la fibre 14. Le dispositif 120 est identique au dispositif 2 sauf que la fibre 14 et le réseau 4 sont remplacés, respectivement, par une fibre 122 et un réseau 124. De plus, contrairement au dispositif 2, la mémoire 74 du dispositif 120 est dépourvue des lois 76 et S_{G}(G). A la place, la mémoire 74 comporte les instructions et les données nécessaires pour exécuter le procédé de la figure 8.

Enfin, contrairement au dispositif 2, le dispositif 120 comporte un appareillage 126 qui permet d'exposer le réseau 124 à la température souhaitée. Par exemple, pour cela, l'appareillage 126 comporte :
- un bain liquide 128 à l'intérieur duquel est plongé la portion de la fibre 122 comportant le réseau 124,
- un élément 130 chauffant ou refroidissant commandable apte à chauffer ou à refroidir le bain 128,
- un capteur 132 de température agencé pour mesurer la température du bain 128, et
- un microcontrôleur 134 configuré pour commander l'élément 130 en fonction d'une consigne Tc de température et de la température mesurée par le capteur 132 pour limiter les variation de température du réseau 124 autour de cette consigne Tc.

L'élément 130 est par exemple un module Peltier ou un ensemble de plusieurs modules Peltier.

Le microcontrôleur 134 comporte un microprocesseur programmable et une mémoire contenant les données et les instructions nécessaires pour asservir la température du bain 128 sur la consigne Tc. En particulier, cette mémoire comporte la consigne Tc. Le microcontrôleur 134 est raccordé à l'unité 70 pour que l'unité 70 puisse modifier la valeur de la consigne Tc.

La fibre 122 est identique à la fibre 14 sauf que le réseau réalisé dans le cœur de cette fibre 122 est le réseau 124 au lieu du réseau 4. Le réseau 124 est placé dans les mêmes conditions d'utilisation que le réseau 4. En particulier, la déformation longitudinale et la pression hydrostatique auxquelles est exposé le réseau 124 sont les mêmes que celles auxquelles est exposé le réseau 4. Ainsi, la longueur d'onde λ_{B} du réseau 124 se déplace ici uniquement en fonction de la température.

Le réseau 124 est un réseau de Bragg d'ordre très élevé.

Un réseau de Bragg d'ordre très élevé et son procédé de fabrication sont décrits dans l'article suivant : Pengtao Luo et Al : « Femtosecond laser plane-by-plane inscribed ultrahigh-order fiber Bragg grating and its application in multi-wavelength fiber lasers », Optic letter, 15/06/2022. Par la suite cet article est désigné par la référence « LUO2022 ».

Dans ce texte, « ordre très élevé » désigne le fait que le spectre de puissance en réflexion du réseau de Bragg présente des harmoniques discernables d'ordre supérieur à N dans le domaine de l'optique, où N est un nombre entier supérieur à 100 et, de préférence, supérieur à 500 ou 1000. Autrement dit, dans le spectre de puissance en réflexion d'un réseau de Bragg d'ordre très élevé, il existe des harmoniques d'ordre k, supérieur à N, qui correspondent chacune à un pic de puissance distinct des pics correspondants aux harmoniques d'ordres k-1 et k+1. Ce pic d'ordre k est également supérieur au bruit. Ce pic d'ordre k est situé à la longueur d'onde λₖ définie par la relation (1) suivante : λₖ = 2*nₑ*Λ/k, où :
- k est un nombre entier égal à l'ordre de l'harmonique,
- nₑ est l'indice effectif de la fibre optique, et
- Λ est le pas du réseau de Bragg.

Ce pic d'ordre k est dans le domaine de l'optique.

Le spectre de puissance d'un réseau de Bragg d'ordre très élevé comporte une succession de pics très rapprochés et très fins dans une plage de longueur d'onde d'intérêt d'au moins 100 nm de largeur dans le domaine de l'optique. De plus, les hauteurs de ces pics sont sensiblement les mêmes sur cette plage d'au moins 100 nm de largeur car chacun de ces pics correspond à un harmonique d'ordre très élevé. Autrement dit, le spectre de puissance d'un réseau de Bragg d'ordre très élevé est un peigne de pics. Un exemple d'un tel peigne est représenté sur la figure 3 de l'article LUO2022.

Il est souligné qu'un réseau de Bragg d'ordre très élevé se distingue des réseaux de Bragg standards couramment utilisés dans le domaine de l'optique par plusieurs caractéristiques. Dans les réseaux de Bragg standards, le pas du réseau de Bragg standard est choisi pour :
- que longueur d'onde λ_{B} soit dans le domaine de l'optique, ou
- que seules les premiers harmoniques d'ordre inférieur à vingt soit dans le domaine de l'optique.

Ainsi, le pas de ces réseaux de Bragg standards sont systématiquement inférieurs à 50 µm ou 20 µm et, généralement, même inférieur à 10 µm. Dans ces conditions, le réseau de Bragg standard ne peut pas être un réseau de Bragg d'ordre très élevé. En effet, dans ce cas, même si des harmoniques d'ordre k supérieur à cent sont discernables dans son spectre de puissance, la longueur d'onde λₖ de ces harmoniques n'est pas dans le domaine de l'optique. Autrement dit, les longueurs d'onde λₖ des harmoniques d'ordre k supérieur à cent, sont toutes inférieures à 200 nm. A l'inverse, le pas d'un réseau de Bragg d'ordre très élevé est supérieur à 20 µm ou 50 µm et, souvent supérieure à 100 µm. Dans ces conditions, la longueur d'onde λ_{B} du réseau de Bragg d'ordre très élevé et les longueurs d'onde de ses harmoniques d'ordre inférieur à cent, ne sont pas dans le domaine de l'optique.

Les motifs des réseaux de Bragg standards sont couramment fabriqués en utilisant des impulsions de rayonnement ultraviolet ou des lasers à CO₂ et non pas des impulsions d'un laser femtoseconde. Les réseaux de Bragg fabriqués sans utiliser d'impulsions d'un laser femtoseconde présentent seulement des harmoniques discernables d'ordre inférieur à vingt. II semble que cela provient du fait que les variations de l'indice de réfraction dans la fibre optique obtenues en mettant en œuvre ces autres procédés connus sont beaucoup moins franches que celles obtenues à l'aide d'un laser femtoseconde. Ainsi, un réseau de Bragg fabriqué sans utiliser d'impulsions d'un laser femtoseconde, même s'il présente un pas supérieur à 20 µm ou à 50 µm, n'est pas un réseau de Bragg d'ordre très élevé.

Il est aussi souligné qu'un réseau de Bragg ne doit pas être confondu avec une juxtaposition, le long d'une fibre optique, de cavités de Fabry-Perot. En effet, les caractéristiques spectrales d'une fibre optique comportant une telle juxtaposition de cavités de Fabry-Perot dépendent des longueurs de chaque cavité de Fabry-Perot ainsi que de la réflectivité des dioptres situés à chaque extrémité de chaque cavité de Fabry-Perot. Contrairement à un réseau de Bragg, les dioptres ne sont pas espacés les uns des autres d'un pas constant pour former une structure périodique.

Les réseaux de Bragg sont également fréquemment utilisés, dans le domaine des sources laser, pour former les dioptres d'extrémité d'une cavité de Fabry Perot de cette source laser. Dans ce cas, la réponse spectrale de cette cavité est principalement déterminée par la longueur de la cavité et non pas par les caractéristiques spectrales des réseaux de Bragg utilisés. Plus précisément, comme enseigné dans l'article LUO2022, la caractéristique spectrale des réseaux de Bragg est alors utilisée pour ajuster la ou les longueurs d'onde de la source laser. Cet usage des réseaux de Bragg est éloigné du domaine de la mesure d'une grandeur physique. En particulier, cet usage n'enseigne pas qu'un réseau de Bragg d'ordre très élevé peut avantageusement être utilisé pour mesurer la sensibilité S_{G} d'une fibre optique.

Le réseau 124 présente un spectre de puissance en réflexion comportant plusieurs pics de puissance répartis à l'intérieur d'une plage de travail. Ici, puisque la source 50 du dispositif 120 est la même que celle du dispositif 2, la plage de travail est aussi la même. L'intervalle spectrale libre du réseau 124 sur la plage de travail est tel que son spectre de puissance présente N₁₂₄ pics à l'intérieur de cette plage de travail, où N₁₂₄ est supérieur ou égal à dix et, de préférence, supérieure ou égal à vingt, trente ou cinquante.

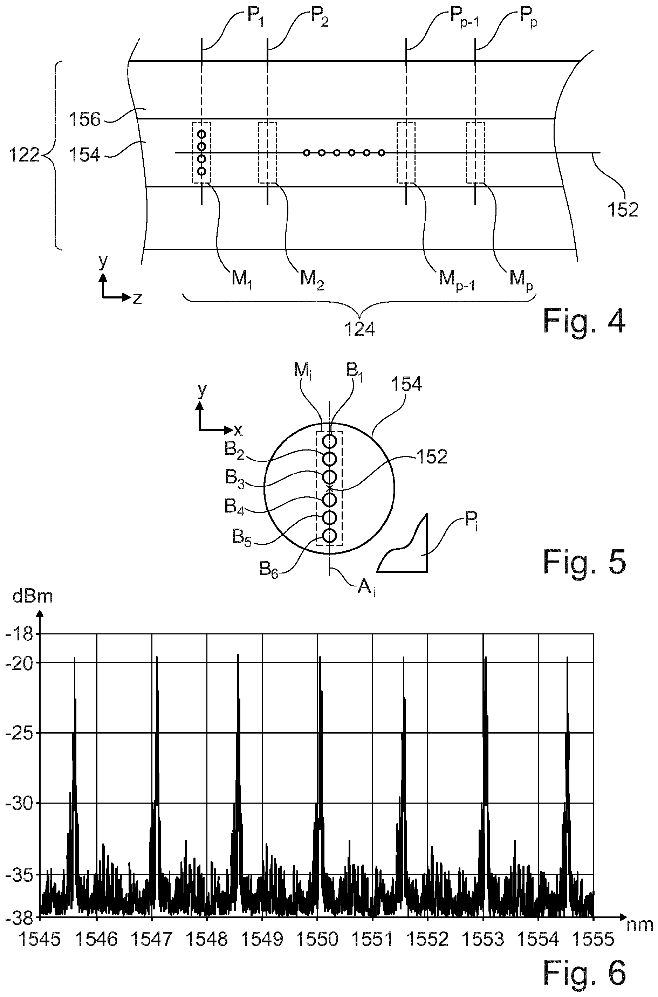

La figure 4 représente plus en détail l'architecture du réseau 124. Le réseau 124 est réalisé dans la fibre optique 122. La fibre optique 122 s'étend le long d'un axe longitudinal 152 parallèle à une direction Z d'un repère orthogonal XYZ. Les figures 4 et 5 sont orientées par rapport à ce repère XYZ. Par exemple, la direction Z est horizontale et la direction Y est verticale.

Pour simplifier la figure 4, seule la portion de la fibre 122 qui contient le réseau 124 est représentée. La fibre optique 122 guide le signal optique le long de l'axe longitudinal 152. La fibre optique 122 comporte :
- un cœur optique 154 dans lequel se propage le signal optique guidé par cette fibre 122,
- une gaine optique 156 réalisée dans un matériau dont l'indice de réfraction permet de maintenir le signal optique à l'intérieur du cœur 154 par réflexion au niveau de l'interface entre le cœur 154 et cette gaine 156, et
- une gaine mécanique, typiquement en polymère, et qui recouvre la gaine 156.

Pour simplifier la figure 4, la gaine mécanique de la fibre optique 122 n'a pas été représentée.

Le réseau 124 est conçu pour obtenir un peigne de pics sur la plage de travail. De plus, ici, le réseau 124 est conçu pour que ce peigne soit formé par les harmoniques du réseau 124 d'ordre proche de 1024.

A cet effet, le réseau 124 est composé d'une succession de motifs Mᵢ disposés les uns derrière les autres le long de l'axe 152. L'indice i d'un motif Mᵢ est le numéro d'ordre du motif dans la direction Z. L'indice i du premier motif le plus à gauche dans le réseau 124 est égal à 1 et l'indice i du dernier motif le plus à droite dans le réseau 124 est égal à p. p est égal au nombre de motifs Mᵢ du réseau 124. Sur la figure 4, seuls les deux premiers et les deux derniers motifs du réseau 124 ont été représentés. La présence des motifs intermédiaires situés entre les motifs M₂ et Mₚ₋₁ est représentée par des petits cercles sur l'axe 152.

Le nombre p de motifs est supérieur ou égal à trois et, de préférence, supérieur ou égal à dix. En effet, il a été observé que plus le nombre p est grand, plus la largeur à mi-hauteur de chaque pic décroît. Ici, le nombre p est aussi choisi suffisamment petit pour que la longueur du réseau 124 reste petite, c'est-à-dire inférieure à 1 mètre et, de préférence, inférieure à 10 cm. La longueur du réseau 124 est égale à la distance entre les motifs M₁ et Mₚ mesurée le long de l'axe 152. Typiquement, le nombre p est inférieur à 200 ou 100.

Le pas Λ₁₂₄ entre deux motifs Mᵢ et Mᵢ₊₁ immédiatement consécutifs dans la direction Z est constant quel que soit l'indice i. Le pas Λ₁₂₄ est donc égal à la distance, le long de l'axe 152, qui sépare deux motifs Mᵢ et Mᵢ₊₁ immédiatement consécutifs.

Ici, le pas Λ₁₂₄ est calculé pour que la longueur d'onde d'un harmonique d'ordre k_{ce} soit égale ou très proche du centre de la plage de travail. Ici, l'ordre k_{ce} est choisi égal à 1024.

Pour cela, le pas Λ₁₂₄ est compris entre 0,9*[k_{ce}*λ_{ce}/(2*nₑ)] et 1,1*[k_{ce}*λ_{ce}/(2*nₑ)] et, de préférence, compris entre 0,98*[k_{ce}*λ_{ce}/(2*nₑ)] et 1,02*[k_{ce}*λ_{ce}/(2*nₑ)], où ne est l'indice effectif de la fibre optique 122 et λ_{ce} est la longueur d'onde située au centre de la plage de travail. Ici, la longueur d'onde λ_{ce} est égale à 1550 nm.

A titre d'exemple, les fibres optiques 14 et 122 sont réalisées à partir d'une fibre optique commercialisée sous la référence SMF-28 par la société Corning^{®}. L'indice nₑ de cette fibre optique est égal à environ 1,4676. Dans ces conditions, le terme k_{ce*}λ_{ce}/(2*nₑ) est égal à approximativement 540,8 µm. Ici, le pas Λ₁₂₄ est choisi égal à 540,8 µm. Avec le choix de cette valeur pour le pas Λ₁₂₄, seuls les harmoniques d'ordre compris entre 317 et 7936 sont dans le domaine de l'optique et seuls les harmoniques d'ordre compris entre 979 et 1087 sont compris dans la plage de travail. En particulier, la longueur d'onde λ_{B} de la fréquence fondamentale du réseau 124 n'est pas dans le domaine de l'optique.

Pour cette valeur du pas Λ₄₁₂₄ et pour que la longueur L₁₂₄ du réseau 124 soit inférieure à 10 cm, le nombre p de motifs est choisi inférieur à 185. Ici, p est choisi égal à 120, de sorte que la longueur L₁₂₄ du réseau 124 est approximativement égale à 65 mm.

Les motifs Mᵢ sont tous structurellement identiques les uns aux autres et diffèrent les uns des autres seulement par leur position le long de l'axe 152. Ainsi, par la suite, seul le motif Mᵢ est décrit en détail. Ce motif Mᵢ s'étend principalement dans un plan Pᵢ perpendiculaire à l'axe 152. Ce plan Pᵢ est donc parallèle aux directions X et Y. Sur la figure 4, seuls les plans P₁, P₂, Pₚ₋₁ et Pₚ dans lesquels s'étendent respectivement, les motifs M₁, M₂, Mₚ₋₁ et Mₚ sont représentés.

La figure 5 représente plus en détail un exemple de réalisation du motif Mᵢ. Sur la figure 5, seule la section transversale du cœur 154 est représentée.

Chaque motif Mᵢ réfléchit une partie du signal optique incident. Une autre partie du signal optique incident traverse le motif Mᵢ. Enfin, chaque motif Mᵢ diffuse une partie de l'énergie du signal optique incident qui n'est alors ni réfléchie ni transmise à travers ce motif Mᵢ. Cette énergie diffusée par chaque motif Mᵢ crée des pertes d'insertion causées par la présence du réseau 124 dans le cœur 154 de la fibre optique 122. Pour minimiser ces pertes d'insertion, ici, la surface S_{Mi} de la section transversale du motif Mᵢ occupe moins de la moitié de la surface S₁₅₄ de la section transversale du cœur 154. La surface S_{Mi} est égale à la surface de la projection orthogonale du motif Mᵢ sur le plan Pᵢ. La surface S₁₅₄ est égale à la surface de la section transversale du cœur 154. Typiquement, la surface S₁₅₄ est constante le long de toute la longueur de la fibre optique 122.

De préférence, la surface S_{Mi} est inférieure à 0,1*S₁₅₄ ou à 0,05*S₁₅₄ ou à 0,01*S₁₅₄. Ici, la surface S_{Mi} est inférieure à 0,05*S₁₅₄.

Pour obtenir une réflectivité suffisante du motif Mᵢ pour limiter le nombre p de motifs et donc pour limiter la longueur L₁₂₄ du réseau 124, la surface S_{Mi} est supérieure à 0,016 µm², c'est-à-dire supérieure à deux fois la surface de la projection orthogonale d'une bulle sphérique de 100 nm de diamètre sur le plan Pᵢ. Dans ce mode de réalisation, la surface S_{Mi} est supérieure ou égale à 0,032 µm².

A cette fin, le motif Mᵢ est constitué de plusieurs bulles Bⱼ. L'indice j d'une bulle est un identifiant qui permet d'identifier de façon unique la bulle Bⱼ parmi l'ensemble des autres bulles du même motif Mᵢ. L'indice j est ici un nombre entier compris entre 1 et q, où q est égal au nombre de bulles Bⱼ du motif Mᵢ. Le nombre q est supérieur ou égal à deux ou quatre. Ici, le nombre q est égal à six.

Dans ce mode de réalisation, toutes les bulles Bⱼ sont structurellement identiques les unes aux autres. Seules leurs positions dans le plan Pᵢ permet de les distinguer les unes des autres.

Chaque bulle Bⱼ crée une variation importante de l'indice de réfraction du cœur 154 dans la direction de propagation du signal optique. Pour cela, l'écart entre l'indice nᵣ₁₅₄ de réfraction du cœur 154 et l'indice n_{rB} de réfraction de la bulle Bⱼ est supérieur à 0,3 ou à 0,4. Ici, l'intérieur de chaque bulle est vide ou pratiquement vide ce qui correspond à un écart entre les indices nᵣ₁₅₄ et n_{rB} supérieur ou égal à 0,4.

De plus, pour que la variation d'indice de réfraction soit brusque, le diamètre Dⱼ de chaque bulle Bⱼ est inférieur à 200 nm et, de préférence, inférieur à 100 nm. Généralement, le diamètre Dⱼ est également supérieur à 10 nm ou 50 nm.

Chaque bulle Bⱼ est principalement sphérique. Ainsi, le diamètre Dⱼ de la bulle Bⱼ est égal au diamètre de la sphère de plus petit volume qui contient entièrement la bulle Bⱼ. Ici, ce diamètre Dⱼ est inférieur à 100 nm.

Le centre de chaque bulle Bⱼ est contenu dans le plan Pᵢ.

Dans ce mode de réalisation, les bulles Bⱼ sont disjointes, c'est-à-dire qu'elles ne se chevauchent pas et qu'elles ne sont pas fluidiquement raccordées les unes aux autres.

Le motif Mᵢ est centré sur l'axe 152. Pour cela, les bulles Bⱼ sont disposées les unes à côté des autres de manière à ce que le barycentre du motif Mᵢ soit situé à moins de 100 nm de l'axe 152 et le centre d'au moins une des bulles Bⱼ est situé à moins de 100 nm de l'axe 152.

Dans ce premier mode de réalisation, le barycentre du motif Mᵢ est situé sur l'axe 152. De plus, le motif Mᵢ est symétrique par rapport à l'axe 152.

Les centres des bulles Bⱼ sont situés les uns derrière les autres sur un axe Aᵢ qui coupe l'axe 152 et qui appartient au plan Pᵢ. Le motif Mᵢ comporte donc une ligne de bulles disjointes. Dans ce cas, l'agencement des bulles disjointes forme ce qui est appelé un « trait pointillé » dans ce texte. Ici, l'axe Aᵢ est parallèle à la direction Y. Dans ce mode de réalisation, les bulles B₃ et B₄ sont situées, respectivement, au-dessus et au-dessous de l'axe 152. Les centres des bulles B₃ et B₄ sont à moins de 100 nm de l'axe 152.

La distance entre deux bulles Bⱼ, Bⱼ₊₁ immédiatement consécutives le long de l'axe Aᵢ est constante. Autrement dit, quelle que soit la paire de bulle Bⱼ, Bⱼ₊₁ immédiatement consécutives le long de l'axe Aᵢ, la distance qui sépare les centres de ces deux bulles est la même.

La figure 5 représente une portion du spectre de puissance du réseau 124 entre 1545 nm et 1555 nm. La réflectivité des pics du peigne obtenu atteint -20 dBm.

La figure 7 représente un procédé de fabrication de la fibre optique 122. Ce procédé débute par une étape 160 de fourniture d'une fibre optique dont le cœur 154 est initialement dépourvu de réseau de Bragg. Par exemple, la fibre optique fournie est la fibre optique commercialisée sous la référence SMF-28 par la société Corning^{®}.

Ici, la gaine mécanique de cette fibre optique est transparente aux impulsions d'un laser femtoseconde de sorte qu'il n'est pas nécessaire de retirer cette gaine mécanique aux emplacements où doivent être réalisés les motifs Mᵢ.

Ensuite, lors d'une étape 162, le réseau 124 est réalisé dans le cœur 154. Pour cela, une opération 164 de formation du motif Mᵢ dans le cœur 154 de la fibre optique fournie est réitérée à chaque emplacement où un tel motif Mᵢ doit être formé.

Lors de l'opération 164, chaque bulle Bⱼ est créée par une seule impulsion du laser femtoseconde. Plus précisément, lors de l'opération 164, le faisceau du laser femtoseconde est focalisé sur le centre de la bulle Bⱼ à créer puis une impulsion d'une durée inférieure à 500 fs ou à 250 fs est émise et irradie le point du cœur 154 où doit se situer le centre de la bulle Bⱼ. La bulle Bⱼ est alors créée dans le cœur 154. Ensuite, la fibre optique est déplacée par rapport au point focal du laser femtoseconde pour que le faisceau du laser femtoseconde soit maintenant focalisé sur le centre de la prochaine bulle Bⱼ₊₁ à créer, puis une nouvelle impulsion du laser femtoseconde est émise.

Dans ce mode de réalisation, les bulles Bⱼ sont donc créées les unes après les autres.

Les valeurs des différents paramètres d'un laser femtoseconde pour créer une bulle telle que la bulle Bⱼ dépendent des caractéristiques de la fibre optique fournie ainsi que des caractéristiques du laser femtoseconde utilisé. Le réglage de ces différents paramètres pour créer les bulles Bⱼ précédemment caractérisées, fait partie des compétences de l'homme du métier. Par exemple, à titre d'illustration, le lecteur peut consulter à ce sujet la demande CN211603608U qui décrit en détail un exemple d'installation permettant de former des bulles telles que les bulles Bⱼ dans le cœur d'une fibre optique. Ici, les paramètres suivants ont été utilisés pour fabriquer la fibre optique 122 :
- la longueur d'onde centrale de l'impulsion du laser femtoseconde est égale à 512 nm,
- la durée de chaque impulsion du laser femtoseconde est égale à 160 fs, et
- la puissance de chaque impulsion du laser femtoseconde est égale à 45 nJ.

Le fonctionnement du dispositif 120 de mesure de la sensibilité S_{G} va maintenant être décrit en référence au procédé de la figure 8.

Lors d'une étape 180, l'unité 70 sélectionne, à l'intérieur de la plage [Gₘᵢₙ ; Gₘₐₓ], l'une des N_{G} valeurs G_{d} pour laquelle la valeur S_{G,d} de la sensibilité S_{G} n'a pas encore été mesurée. Ici, les valeurs G_{d} sont les mêmes que celles contenues dans la table 80 du dispositif 2.

Ensuite, lors d'une étape 182, pour la valeur G_{d} sélectionnée, l'unité 70 commande l'appareillage 126 pour exposer le réseau 124 à une température égale à G_{d1}**.** La valeur G_{d1} est définie par la relation suivante : G_{d1} = G_{d}-ε, où :
- G_{d} est la valeur G_{d} sélectionnée lors de l'étape 180, et
- ε est un pas constant prédéterminé.

De préférence, le pas ε est inférieure ou égal à 10°C. Ici, le pas ε est égal à 5°C.

Par exemple, lors de l'étape 182, l'unité 70 règle la valeur de la consigne Tc à la valeur G_{d1}.

Une fois que le bain 128 a atteint la température G_{d1}, lors d'une étape 184, pour chacun des N₁₂₄ pics du spectre du réseau 124, l'unité 70 mesure la valeur λ_{d1,k} correspondante, où l'indice k est le numéro d'ordre de l'harmonique situé à la longueur d'onde égale à λ_{d1,k}**.** Par exemple, pour cela, l'unité 70 commande la source 50 pour faire varier la longueur d'onde λₛ depuis la longueur d'onde λₛₘᵢₙ jusqu'à la longueur d'onde λₛₘₐₓ. En parallèle, l'unité 70 relève la valeur de la longueur d'onde λₛ du signal optique émis par la source 50 à chaque fois que le signal électrique généré par le capteur 62 passe par un maximum situé bien au-dessus du bruit de mesure. Chacune de ces valeurs relevées correspondant à une valeur λ_{d1,k} respective. Étant donné que le spectre du réseau 124 comporte N₁₂₄ pics dans la plage [λₛₘᵢₙ ; λₛₘₐₓ], lors de l'étape 184, l'unité 70 mesure N₁₂₄ valeurs λ_{d1,k}.

Ensuite, lors d'une étape 186, l'unité 70 commande l'appareillage 126 pour exposer le réseau 124 à une température égale à G_{d2}. La valeur G_{d2} est définie par la relation suivante : G_{d2} = G_{d}+ε, où :
- G_{d} est la valeur G_{d} sélectionnée lors de l'étape 180, et
- ε est le même pas que celui utilisé lors de l'étape 182.

L'étape 186 est réalisée comme l'étape 182 sauf que la valeur G_{d1} est remplacée par la valeur G_{d2}.

Une fois que le bain 128 a atteint la température G_{d2}, lors d'une étape 188, pour chacun des N₁₂₄ pics du spectre du réseau 124, l'unité 70 mesure la valeur λ_{d2,k} correspondante. L'étape 188 est réalisée comme l'étape 184. A l'issue de l'étape 188, l'unité 70 a mesuré N₁₂₄ valeurs λ_{d2,k}.

A ce stade, il est souligné que les valeurs G_{d1} et G_{d2} ont été choisie de sorte que la valeur G_{d} soit une valeur médiane, c'est-à-dire, dans cet exemple, une valeur située à égale distance des valeurs G_{d1} et G_{d2}.

Ensuite, lors d'une étape 190, l'unité 70 détermine la valeur S_{G,d} de la sensibilité S_{G} de la fibre 122 lorsque la température est égale à la valeur G_{d}. Il est souligné que la sensibilité S_{G} de la fibre 122 est identique à la sensibilité de la fibre 14 car ces deux fibres sont identiques à l'exception du fait que la fibre 14 comporte le réseau 4 alors que la fibre 122 comporte le réseau 124. Ainsi, mesurer la sensibilité de la fibre 14 revient à mesurer la sensibilité de la fibre 122.

Pour déterminer la valeur S_{G,d}, l'unité 70 utilise les N₁₂₄ valeurs λ_{d1,k} et les N₁₂₄ valeurs λ_{d2,k} mesurées lors des étapes, respectivement, 184 et 188. Ici, c'est le grand nombre de valeurs λ_{d1,k} et λ_{d2,k} utilisées qui permet d'accroître la précision de la valeur S_{G,d} déterminée. C'est pour cela que le nombre N₁₂₄ de pics est choisi au moins supérieur à dix.

A titre d'illustration, pour déterminer la valeur S_{G,d}, lors d'une opération 192, pour chaque pic k du spectre du réseau 124 compris dans la plage [λₛₘᵢₙ ; λₛₘₐₓ], l'unité 70 calcule d'abord une valeur grossière S_{G,d,k} de la sensibilité S_{G} à la température G_{d}. Pour cela, pour chaque pic k, l'unité 70 calcule la valeur grossière S_{G,d,k} à l'aide de la relation suivante : S_{G,d,k} = (λ_{d2,k} - λ_{d1,k})/(λ_{d1,k}*(G_{d2}-G_{d1})).

Ensuite, lors d'une opération 194, l'unité 70 calcule la moyenne arithmétique des N₁₂₄ valeurs S_{G,d,k} calculées lors de l'opération 192. La valeur S_{G,d} est prise égale à cette moyenne arithmétique. L'étape 190 est alors terminée.

Enfin, lors d'une étape 196, la température G_{d} et la valeur S_{G,d} de la sensibilité S_{G} associée sont enregistrées dans une table.

Une fois l'étape 196 terminée, le procédé retourne à l'étape 180 tant qu'il existe encore une valeur G_{d} pour laquelle la valeur S_{G,d} correspondante n'a pas encore été calculée.

Une fois que toutes les valeurs S_{G,d} associées aux valeurs G_{d} ont été calculées, lors d'une étape 198, l'unité 70 construit la loi S_{G}(G). Pour cela, ici, la table construite par les ré-itérations successives de l'étape 196, est enregistrée dans la mémoire 74 du dispositif 2 en tant que table 80.

### Chapitre II :Variantes :

### II.1 - Variantes de la mesure de la sensibilité S_{G} :

### Variantes du réseau 124 de Bragg :

L'ordre k_{ce} de l'harmonique qui se trouve au centre du peigne à réaliser est ici supérieur à 100 et, de préférence, choisi supérieur à 500 ou 1000. Cet ordre k_{ce} peut aussi être choisi supérieur 2000 ou 4000 ou 10000. Théoriquement, il n'existe pas de limite supérieure pour cet ordre k_{ce}. Toutefois, il découle de la relation (1) que plus l'ordre k_{ce} est grand, plus le pas Λ du réseau de Bragg est grand et donc que le réseau de Bragg est plus long. En pratique, c'est donc la longueur maximale souhaitée pour le réseau 124 qui impose une limite supérieure pour l'ordre k_{ce}. Ici, cette longueur maximale est fixée à 1 m.

De même, la valeur minimale du pas Λ est supérieure à 20 µm et, typiquement, supérieure à 50 µm pour que des harmoniques d'ordre très élevé soient compris dans le domaine de l'optique. Théoriquement, il n'existe pas de valeur maximale pour le pas Λ. En effet, quelle que soit la valeur retenue pour le pas Λ, il est possible de trouver une valeur pour l'ordre k_{ce} qui permet de placer la longueur d'onde λ_{ce} dans le domaine de l'optique. Toutefois, plus le pas Λ est grand, plus le réseau de Bragg est long. En pratique, c'est donc aussi la longueur maximale souhaitée pour le réseau 124 qui impose une limite supérieure pour la valeur du pas Λ.

A titre d'exemple, en appliquant l'enseignement donné dans le chapitre I, il est possible d'obtenir des peignes centrés sur les longueurs d'onde couramment utilisées en optique tel que, notamment, la longueur d'onde de 800 nm, 1000 nm, 1300 nm ou 1500 nm.

La plage de travail peut être plus large que 100 nm. Par exemple, la largeur de cette plage de travail est, en variante, supérieure à 200 nm ou 300 nm. Il n'existe pas de limite supérieure pour la largeur de cette plage de travail si ce n'est qu'elle doit se situer dans le domaine de l'optique et qu'elle doit pouvoir être balayée par la source 50 de l'analyseur spectral.

Les motifs du réseau de Bragg réalisé dans le cœur de la fibre optique peuvent avoir des formes différentes. Par exemple, en variante, chaque motif comporte une seule bulle. Dans un autre mode de réalisation, comme décrit dans l'article LUO2022, chaque motif à la forme d'une ellipse. Les différentes variantes du motif du réseau de Bragg d'ordre très élevé décrites dans la demande déposée le 29/07/2022 sous le n° FR2207936 par le présent déposant, s'appliquent aux réseaux de Bragg décrit ici.

Il existe de nombreuses variantes du procédé de fabrication d'un réseau de Bragg d'ordre très élevé. En particulier, tous les procédés de fabrication et leurs variantes décrits dans la demande déposée le 29/07/2022 sous le n° FR2207936 par le présent déposant sont utilisables pour fabriquer chaque réseau de Bragg d'ordre très élevé. Le procédé de fabrication décrit dans l'article LUO2022 est aussi utilisable.

### Variantes du procédé de mesure de la sensibilité S_{G} :

Le pas ε peut être plus grand que 10°C.

La valeur médiane est située entre G_{d1} et G_{d2} mais pas nécessairement égale à (G_{d1}+G_{d2})/2. Par exemple, dans un cas simplifié, la valeur médiane est prise égale à G_{d1} ou à G_{d2}.

Dans un mode de réalisation simplifié, pour le calcul de la valeur S_{G,d}, l'unité 70 n'utilise qu'une partie des pics situés à l'intérieur de la plage [λₛₘᵢₙ ; λₛₘₐₓ]. Toutefois, le nombre de pics utilisés reste supérieur à dix.

D'autres modes de réalisation de l'étape 190 sont possibles pour trouver la valeur S_{G,d} qui minimise la somme de tous les écarts S_{G,d,k} - S_{G,d}. Par exemple, l'unité 70 détermine la droite qui minimise les écarts entre les points (λ_{d,k}; Δλ_{d,k}/ΔG_{d}). L'abscisse du point (λ_{d,k}; Δλ_{d,k}/ΔG_{d}) est λ_{d,k} et λ_{d,k} est défini par la relation suivante : λ_{d,k} = (λ_{d2,k} + λ_{d1,k})/2. L'ordonné du point (λ_{d,k}; Δλ_{d,k}/ΔG_{d}) est Δλ_{d,k}/ΔG_{d} et Δλ_{d,k}/ΔG_{d} est défini par la relation suivante : Δλ_{d,k}/ΔG_{d} = (λ_{d2,k} - λ_{d1,k})/(G_{d2}-G_{d1}). La valeur S_{G,d} de la sensibilité S_{G} lorsque la température est égale à G_{d} est prise égale à la pente de la droite ainsi déterminée.

Le procédé de mesure de la sensibilité d'un guide d'onde peut être mis en œuvre indépendamment du procédé de calibration du dispositif 2. Par exemple, le procédé de mesure de la sensibilité d'un guide d'onde peut être mis en œuvre pour mesurer la sensibilité de plusieurs guides d'onde afin de déterminer si ces guides d'onde présentent la même sensibilité.

### II.2 - Variantes de la mesure de la grandeur physique G :

Le dispositif 2 peut aussi comporter un étalon pour améliorer la précision des mesures comme décrit, par exemple, dans la demande CN102879022A.

En variante, la fibre 14 comporte une succession de plusieurs réseaux de Bragg réalisés les uns après les autres dans le cœur 154. Dans ce cas, de préférence, les longueurs d'onde λ_{B} de chacun de ces réseaux de Bragg sont différentes. Grâce à cela, le dispositif 2 permet de mesurer la grandeur physique G à différents endroits. Dans ce mode de réalisation, le spectre de puissance de la fibre 14 comporte alors plusieurs pics de puissance dans la plage de travail. Tout ce qui a été décrit ici dans le cas particulier où la fibre 14 comporte un seul réseau de Bragg, s'applique à chacun de ces réseaux de Bragg supplémentaires. En particulier, pour chaque réseau de Bragg supplémentaire, une loi d'étalonnage spécifique à ce réseau supplémentaire est enregistrée dans la mémoire 74 et utilisée pour convertir le déplacement de sa longueur d'onde λ_{B} en une valeur courante de la grandeur physique G à l'emplacement de ce réseau supplémentaire. Cette loi d'étalonnage spécifique est construite et utilisée comme décrit dans le cas particulier de la loi 76 d'étalonnage.

Le capteur 62 peut être raccordé à l'extrémité distale de la fibre 14 au lieu d'être raccordé à son extrémité proximale. Dans ce cas, le capteur 62 mesure le signal optique qui a traversé le réseau 4. Dès lors, le spectre de puissance du signal mesuré est un spectre de puissance en transmission et non pas en réflexion. Toutefois, tout ce qui a été décrit dans le cas particulier où le capteur 62 est raccordée à l'extrémité proximale s'adapte, sans difficulté particulière, au cas où le capteur 62 est raccordé à l'extrémité distale.

En variante, la source 50 n'est pas accordable. Par exemple, la source 50 est une source laser large, c'est-à-dire une source laser qui émet un signal optique dont le spectre de puissance recouvre simultanément la totalité de la plage de travail. Dans ce cas, le signal optique émis n'est pas mono-fréquence. De plus, pour chaque réponse spectrale à mesurer, l'analyseur spectral comporte alors une pluralité de photodétecteurs qui mesure simultanément la puissance de la réponse spectrale pour un grand nombre de longueurs d'ondes différentes. Par exemple, dans ce cas, le capteur 62 est un spectromètre à barrette. Dans un tel mode de réalisation, il n'est pas nécessaire de faire varier la longueur d'onde λₛ pour balayer toute la plage de travail.

La source 50 n'est pas nécessairement une source laser. Par exemple, la source 50 peut aussi être réalisée à l'aide d'une cavité de Fabry Pérot accordable. Dans ce cas, le signal de commande provoque le déplacement d'au moins un des dioptres de cette cavité de Fabry Pérot. Ce déplacement d'un dioptre provoque alors une modifications de la fréquence de résonance propre de la cavité et donc une modification de la longueur d'onde λₛ.

D'autres implémentations de la loi 76 sont possibles. Par exemple, la loi 76 est implémentée sous la forme d'un polynôme dont les valeurs des coefficients sont enregistrées dans la mémoire 74. Dans ce cas, la table 78 est omise. A partir des points points de coordonnées (Δλᵢ; Gᵢ) calculés, l'unité 70 du dispositif 2 calcule les coefficients d'un polynôme qui passe au plus près de ces points. Ensuite, ce sont les valeurs des coefficients de ce polynôme qui sont enregistrées dans la mémoire 74 pour définir la loi 76.

L'unité 70 peut aussi être adaptée pour déterminer seulement la variation ΔG de la grandeur physique mesurée et non pas sa valeur absolue. Dans ce cas, la loi 76 d'étalonnage est construite de manière à associer à chaque variation Δλ, une valeur correspondante de la variation ΔG. Il n'est alors pas nécessaire de connaître la valeur G₀ de la grandeur physique mesurée correspondant à la longueur d'onde λ_{B,0}.

Dans une autre variante d'implémentation, les valeurs de référence λ_{B,0} et G₀ sont intégrées en tant que coefficients dans la loi d'étalonnage. Dans ce cas, pour obtenir la valeur courante G_{c} de la grandeur physique G, seule la valeur λ_{c} de la longueur d'onde λ_{B} est fournie comme paramètre d'entrée de la loi d'étalonnage. Dans ce cas, lors de l'étape 106, de préférence, la loi d'étalonnage est construite à partir des points de coordonnées (λᵢ; Gᵢ) à la place des points de coordonnées (Δλᵢ; Gᵢ). Ensuite, la table 78 est remplacée par une table contenant les points de coordonnées (λᵢ; Gᵢ) à la place des points de coordonnées (Δλᵢ; Gᵢ).

Lors de l'étape 104, d'autres choix sont possibles pour les valeurs λᵣ et Gᵣ. Par exemple, dans un mode de réalisation simplifié, lors de l'étape 104, chaque valeur λᵢ correspondant à une valeur Gᵢ est calculée à l'aide de la relation suivante : (λᵢ - λᵣ)/λᵣ = S_{G,i}*(Gᵢ-Gᵣ), où :
- S_{G,i} est égal à S_{G}(Gᵢ), et
- λᵣ et Gᵣ sont systématiquement prix égaux, respectivement, à λ_{B,0} et G₀ quelle que soit la valeur de l'indice i.

D'autres implémentations de la loi S_{G}(G) sont possibles. Par exemple, la loi S_{G}(G) est aussi implémentée sous la forme d'un polynôme dont les valeurs des coefficients sont enregistrées dans la mémoire 74. Dans ce cas, la table 80 est omise. A partir des points (G_{d}, S_{G,d}) enregistrés, l'unité 70 du dispositif 120 calcule les coefficients d'un polynôme qui passe au plus près de ces points. Ensuite, lors de l'étape 198, ce sont les valeurs des coefficients de ce polynôme qui sont enregistrées dans la mémoire 74 pour définir la loi S_{G}(G).

Dans une variante simplifiée, la sensibilité S_{G} est considérée comme étant constante sur toute la plage d'utilisation du dispositif 2. Dans ce cas, la loi d'étalonnage 76 peut être remplacée par une loi d'étalonnage simplifiée. Par exemple, la loi d'étalonnage simplifiée est la suivante : G_{c} = (λ_{c} - λ_{B,0})/( λ_{B,0} * S_{G,0}) + G₀, où S_{G,0} est la valeur constante de la sensibilité S_{G}. La valeur S_{G,0} est mesurée en exécutant une seule fois les étapes 180 à 196 du procédé de figure 8. Par exemple, lors de cette mise en œuvre du procédé de la figure 8, les valeurs G_{d1} et G_{d2} sont choisies égales à, respectivement, Gₘᵢₙ et Gₘₐₓ. Lorsque la loi d'étalonnage simplifiée ci-dessus est mise en œuvre, les étapes 104 et 106 de la phase 100 de calibration du dispositif 2, sont omises. La table 78 et la loi S_{G}(G) sont également omises.

En variante, le réseau 124 est réalisé dans le cœur de la fibre 14 en plus du réseau 4. De préférence, le réseau 124 est alors réalisé à proximité du réseau 4. Par exemple, lorsque les motifs des réseaux 4 et 124 occupent qu'une petite fraction de la section transversale du cœur 154, le réseau 4 est réalisé d'un côté d'un plan médian contenant l'axe 152 et le réseau 124 est réalisé de l'autre côté de ce plan médian en vis-à-vis du réseau 4. La hauteur du pic du réseau 4 à la longueur d'onde λ_{B} est bien plus grande que la hauteur des pics du réseau 124 dans un spectre de puissance. Ainsi, l'unité 70 peut facilement discerner le pic du réseau 4 des pics du réseau 124. Dans ce cas, il n'est pas nécessaire d'utiliser une fibre optique différente de la fibre 14 pour construire la loi d'évolution S_{G}(G). La fibre 14 peut être utilisée à la place de la fibre 122.

Dans une variante simplifiée, le réseau 4 est un réseau de Bragg d'ordre très élevé. Par exemple, le réseau 4 est identique au réseau 124. Dans ce cas, c'est le même réseau d'ordre très élevé qui est utilisé pour construire la loi S_{G}(G) puis pour mesurer la grandeur physique G. La fibre 14 peut alors être utilisée à la place de la fibre 122.

### Variantes de la grandeur physique G :

La longueur d'onde λ_{B} du réseau 4 varie en réponse à une variation de température, une déformation longitudinale ou une variation de la pression hydrostatique. Ainsi, tous les modes de réalisation précédent, peuvent être adaptés au cas où la grandeur physique G est choisie dans le groupe composé de la température, d'une déformation longitudinale et d'une variation de pression hydrostatique. A l'aide de la mesure d'une de ces grandeurs physiques, il est possible d'en déduire des mesures pour d'autres grandeurs physiques telles que des vibrations, l'accélération ou encore de détecter des ondes acoustiques.

La grandeur physique G peut aussi être une autre grandeur physique que la température, la déformation longitudinale et la pression hydrostatique. Pour cela, il suffit que les réseaux 4 et 124 soient rendus sensibles à cette autre grandeur physique. Par exemple, les réseaux 4 et 124 peuvent être rendus sensibles à une dose de radiation. A titre d'illustration, pour cela, le cœur 154 de la fibre optique 14 est réalisé dans un matériau photosensible. Ici, ce cœur 154 est réalisé en germanosilicate. Initialement, un réseau de Bragg est fabriqué dans le cœur de la fibre optique 14. Ensuite, ce réseau de Bragg est transformé en un réseau de Bragg sensible à une dose du rayonnement à mesurer. Pour cela, ce réseau de Bragg fabriqué est exposé à un rayonnement ultraviolet pour créer des centres colorés issus de la recombinaison des liaisons entre le germanium et la silice. Lorsqu'ils sont soumis à une dose du rayonnement à mesurer, ces centres colorés sont modifiés, conduisant à un décalage de la longueur d'onde λ_{B} du réseau de Bragg.

### II.3 - Variantes communes aux dispositifs 2 et 120 :

### Variantes des guides d'onde :

Le guide d'onde n'est pas nécessairement une fibre optique. Tout ce qui est décrit dans ce texte dans le cas particulier d'une fibre optique s'applique aussi au cas où le guide d'onde est un guide d'onde réalisé sur une puce photonique. Par exemple, dans ce dernier cas, le cœur de la fibre optique est en silicium monocristallin ou dans un autre matériau semi-conducteur et la gaîne est réalisée dans un matériau couramment utilisé dans le domaine de l'optique sur silicium tel que de l'oxyde de silicium.

D'autres fibres optiques que la fibre SMF-28 peuvent être utilisée. Par exemple, la fibre optique peut être une fibre optique multimode ou MMF (Multi-Mode Fiber).

II n'est pas nécessaire que le cœur de la fibre optique soit constitué d'un dopage spécifique. Ainsi, ce qui est décrit dans ce texte peut être mis en œuvre avec des fibres optiques dont le cœur est réalisé en germanosilicates, en silice pure, en aluminosilicates dopés aux terres rares ou en saphir.

### Variantes de la structure isolante :

D'autres modes de réalisation de la structure isolante sont possibles. Par exemple, les réseaux 4 et 124 peuvent être isolés des variations de contraintes mécaniques en mettant en œuvre l'enseignement de la demande FR3087008A1.

La structure isolante peut aussi être conçue pour isoler les réseaux 4 et 124 des variations de la pression hydrostatique.

La structure isolante peut être une structure isolante active, c'est-à-dire qui consomme de l'énergie électrique pour fonctionner, ou une structure isolante passive qui ne nécessite pas d'être alimentée en énergie électrique.

La structure isolante peut être omise notamment si les grandeurs physiques, autres que la grandeur physique G à mesurer, ne peuvent pas varier ou varient seulement de façon négligeable.

Tout ce qui a été décrit précédemment dans le cas particulier où la longueur d'onde λ_{c} du pic d'ordre k_{c} est comprise entre 200 nm et 5000 nm s'applique aussi au cas où la longueur d'onde λ_{c} est comprise entre 5000 nm et 10000 nm et, en particulier, au cas où la longueur d'onde λ_{c} est comprise dans le domaine de l'infrarouge. Lorsque la longueur d'onde λ_{c} est dans le domaine de l'infrarouge, le cœur de la fibre optique est par exemple réalisé dans du verre de chalcogénure.

Plusieurs des variantes décrites ci-dessus peuvent être combinées dans un même mode de réalisation.

La loi S_{G}(G) enregistrée dans la mémoire 74 peut être construite sans utiliser un réseau de Bragg d'ordre très élevé. Par exemple, dans un autre mode de réalisation, les points (G_{d}, S_{G,d}) sont mesurés en utilisant une nouvelle fibre optique identique à la fibre 122 sauf que le réseau 124 est remplacé par N_{Bg} réseaux de Bragg présentant chacun une longueur d'onde λ_{B} située à l'intérieur de la plage [λₛₘᵢₙ ; λₛₘₐₓ] et différente de celles des autres réseaux de Bragg réalisés dans cette même fibre. Le procédé décrit en référence à la figure 8 fonctionne également lorsque la fibre 122 est remplacée par cette nouvelle fibre. De préférence, le nombre N_{Bg} est supérieur ou égal dix ou trente ou cinquante. Toutefois, dans un mode de réalisation simplifié, le nombre N_{Bg} est égal à un. Dans ce dernier cas, chaque valeur S_{G,d} est calculée en utilisant un seul pic de puissance et non pas plusieurs comme dans les modes de réalisation précédemment décrits.

### Chapitre III : Avantages des modes de réalisation décrits :

Par rapport à une succession de réseaux de Bragg réalisés les uns derrière les autres dans un guide d'onde et ayant chacun leur propre longueur d'onde fondamentale contenue à l'intérieur de la plage de travail, un réseau de Bragg d'ordre très élevé est beaucoup plus petit et présente un nombre de pics égal ou supérieur. Cela simplifie donc la fabrication du dispositif 120 utilisé pour mesurer la sensibilité S_{G}. De plus, puisque le réseau 124 est moins encombrant, cela facilite la réalisation de la structure isolante 90 et de l'appareillage 126. Ainsi, l'utilisation d'un réseau de Bragg d'ordre très élevé simplifie aussi la mise en œuvre du procédé pour mesurer la sensibilité S_{G}. Enfin, la sensibilité S_{G} mesurée est très précise car elle est obtenue à partir des mesures réalisées pour plus d'une dizaine de longueurs d'ondes différentes, c'est-à-dire ici pour les longueurs d'onde de plus d'une dizaine de pics du spectre de puissance du réseau 124.

Le fait de réaliser le réseau 124 dans une fibre optique simplifie la réalisation du dispositif 120 de mesure de la sensibilité S_{G}.

Le fait d'utiliser une ou plusieurs bulles dans chaque motif Mᵢ permet d'obtenir un motif petit et donc de réduire substantiellement les pertes d'insertion.

Le fait d'utiliser plusieurs bulles disjointes permet d'obtenir un motif Mᵢ suffisamment réfléchissant pour diminuer le nombre p de motifs et donc pour conserver la compacité du réseau 124 tout en limitant les pertes par insertion. En effet, lorsque les bulles se chevauchent, les zones de chevauchement entre plusieurs bulles sont soumises à plusieurs impulsions successives du laser femtoseconde. Il a été observé qu'une zone du cœur de la fibre optique qui est soumise à plusieurs impulsions du laser femtoseconde, se dégrade. Cette dégradation augmente les pertes par diffusion. A l'inverse, lorsque les bulles sont disjointes, de telles zones de chevauchement n'existent pas, ce qui limite les pertes par insertion.

Le fait de construire la loi d'évolution S_{G}(G) à partir de plusieurs valeurs S_{G,d} mesurées pour différentes valeurs G_{d} de la grandeur physique G, permet de déterminer avec plus de précision la valeur de la sensibilité S_{G} pour une valeur donnée de la grandeur physique G.

Le fait de prendre la valeur S_{G,d} de la sensibilité S_{G} égale à une valeur qui minimise tous les écarts (S_{G,d,k} - S_{G,d}) permet de diminuer l'erreur sur la valeur mesurée de la sensibilité.

Le fait de construire la loi 76 d'étalonnage en utilisant seulement les valeurs λ_{B,0} et G₀ de référence et une loi S_{G}(G) pré-enregistrée simplifie la calibration du dispositif de mesure de la grandeur physique G. En effet, la loi S_{G}(G) est indépendante de la longueur d'onde λ_{B}. Ainsi, une fois que la loi S_{G}(G) a été construire pour la fibre 14, la même loi S_{G}(G) peut être utilisée pour construire la loi d'étalonnage de tout réseau de Bragg réalisé dans cette fibre 14. Dès lors pour calibrer un réseau de Bragg réalisé dans la fibre 14, il suffit de mesurer les coordonnées (λ_{B,0} ; G₀) d'un seul point de référence. Ceci est plus simple que les procédés connus de calibration. En effet, contrairement aux procédés connus, il n'est pas nécessaire d'obtenir, par mesure, plusieurs points de coordonnées (Δλᵢ, Gᵢ). Ici, ces points de coordonnées (Δλᵢ, Gᵢ) sont obtenus par calcul et non pas par mesure. Ensuite, la loi S_{G}(G) est la même quelle que soit la longueur d'onde λ_{B} du réseau de Bragg réalisé dans la fibre 14. Dès lors, la même loi S_{G}(G) peut être utilisée pour construire la loi d'étalonnage de plusieurs réseaux de Bragg réalisés dans la fibre 14 même si ces réseaux de Bragg ont des longueurs d'onde λ_{B} différentes. Autrement dit, il n'est pas nécessaire de recommencer les mesures qui ont permis de construire la loi S_{G}(G) pour chaque longueur d'onde λ_{B}. De plus, le procédé de construction d'une loi d'étalonnage décrit ici prend en compte le fait que la sensibilité S_{G} varie en fonction de la valeur de la grandeur physique G. La loi d'étalonnage construite est donc particulièrement précise.

Le fait de réitérer l'étalonnage du capteur après plusieurs mesures permet de compenser les dérives dans le temps du dispositif de mesure de la grandeur physique G.

Le fait de calculer la valeur λᵢ à l'aide de la relation (λᵢ - λᵣ)/λᵣ = S_{G,i}*(Gᵢ-Gᵣ) dans laquelle les valeurs λᵣ et Gᵣ sont égales, respectivement, aux valeurs λᵢ₋₁ et Gᵢ₋₁, où λᵢ₋₁ est la valeur précédemment calculée correspondant à la valeur Gᵢ₋₁ la plus proche de de la valeur Gᵢ, permet d'améliorer l'exactitude de la loi d'étalonnage 76 et donc la précision de la mesure de la grandeur physique G.

## Revendications

1. Dispositif de mesure de la sensibilité S_{G} d'un guide d'onde à une variation ΔG d'une grandeur physique G, la sensibilité S_{G} pour une valeur donnée de la grandeur physique G étant définie par la relation suivante Δλ_{B}/λ_{B} = S_{G}*ΔG, où :
- λ_{B} est la longueur d'onde fondamentale d'un réseau de Bragg réalisé dans ce guide d'onde,
- Δλ_{B} est la variation de la longueur d'onde fondamentale du réseau de Bragg obtenue en réponse à la variation ΔG de la grandeur physique, et
- ΔG est une variation infinitésimale de la valeur de la grandeur physique G autour de la valeur donnée de la grandeur physique G,
ce dispositif comportant :
- un réseau (124) de Bragg réalisé à l'intérieur du guide d'onde, ce réseau de Bragg comportant au moins trois motifs identiques alignés les uns derrières les autres le long d'un axe longitudinal du guide d'onde et séparés les uns des autres par un pas constant,
- un appareillage (126) apte à exposer le réseau de Bragg à une première valeur connue de la grandeur physique puis à une seconde valeur connue de la grandeur physique, ces première et seconde valeurs connues de la grandeur physique étant situées de part et d'autre d'une valeur médiane de la grandeur physique, et
- un analyseur spectrale (20) apte à relever, dans une plage de travail prédéterminée comprise entre 200 nm et 10000 nm, la valeur de la longueur d'onde à laquelle apparaît un pic de puissance dans le spectre de puissance en réflexion du réseau de Bragg **caractérisé en ce que** :
- le pas du réseau (124) de Bragg est configuré pour que le spectre de puissance de ce réseau de Bragg présente au moins dix harmoniques d'ordre supérieur à cent à l'intérieur de la plage de travail, chacun de ces harmoniques étant situé à une longueur d'onde respective λₖ, où k est le numéro d'ordre de cet harmonique,
- l'analyseur spectral (20) est configuré pour exécuter les étapes suivantes :
- lorsque la valeur de la grandeur physique est la première valeur connue, la mesure d'une première valeur de la longueur d'onde λₖ de chacun des harmoniques situés à l'intérieur de la plage de travail, puis
- lorsque la valeur de la grandeur physique est la seconde valeur, la mesure d'une seconde valeur de la longueur d'onde λₖ de chacun de ces harmoniques situés à l'intérieur de la plage de travail, puis
- la détermination de la valeur de la sensibilité S_{G} pour la valeur médiane de la grandeur physique à partir de l'écart entre les première et seconde valeurs de la grandeur physique et à partir des première et seconde valeurs mesurées pour chaque longueur d'onde λₖ.

2. Dispositif selon la revendication 1, dans lequel le guide d'onde est une fibre optique.

3. Dispositif selon l'une quelconque des revendications précédentes, dans lequel :
- chaque motif (M₁, M₂, M_{N-1}, M_{N}) du réseau de Bragg s'étend principalement dans un plan, appelé « plan du motif », perpendiculaire à l'axe longitudinal du guide d'onde, et
- chaque motif est constitué d'une ou plusieurs bulles (B₁ - B₆) disposées les unes à côté des autres dans le plan du motif, et
- la surface de la projection orthogonale de toutes les bulles du motif sur le plan du motif est inférieure à 50 % de la surface de la section transversale du cœur (154) du guide d'onde.

4. Dispositif selon la revendication 3, dans lequel chaque motif est constitué de plusieurs bulles (B₁ - B₆) disjointes disposées les unes à côté des autres dans le plan du motif.

5. Dispositif selon l'une quelconque des revendications précédentes, dans lequel :
- le pas du réseau de Bragg est supérieur ou égal à 20 µm, et
- l'écart entre l'indice de réfraction du cœur du guide d'onde et l'indice de réfraction de chaque motif du réseau de Bragg est supérieur à 0,3.

6. Dispositif selon l'une quelconque des revendications précédentes, dans lequel chaque motif (M₁, M₂, M_{N-1}, M_{N}) est réalisé à l'aide d'une impulsion d'un laser femtoseconde.

7. Dispositif selon l'une quelconque des revendications précédentes, dans lequel la grandeur physique est choisie dans le groupe constitué d'une température, d'une déformation mécanique et d'une pression hydrostatique.

8. Dispositif selon l'une quelconque des revendications précédentes, dans lequel la plage de travail prédéterminée est comprise entre 200 nm et 5000 nm.

9. Procédé de mesure de la sensibilité S_{G} d'un guide d'onde à une variation ΔG d'une grandeur physique G, la sensibilité S_{G} pour une valeur donnée de la grandeur physique G étant définie par la relation suivante Δλ_{B}/λ_{B} = S_{G}*ΔG, où :
- λ_{B} est la longueur d'onde fondamentale d'un réseau de Bragg réalisé dans le guide d'onde,
- Δλ_{B} est la variation de la longueur d'onde fondamentale du réseau de Bragg obtenue en réponse à la variation ΔG de la grandeur physique, et
- ΔG est une variation infinitésimale de la valeur de la grandeur physique G autour de la valeur donnée de la grandeur physique G,
ce procédé comportant les étapes suivantes :
a) la réalisation (162) d'un réseau de Bragg à l'intérieur du guide d'onde, ce réseau de Bragg comportant au moins trois motifs identiques alignés les uns derrières les autres le long d'un axe longitudinal du guide d'onde et séparés les uns des autres par un pas constant,
b) l'exposition (182 , 186) du réseau de Bragg à une première valeur connue de la grandeur physique puis à une seconde valeur connue de la grandeur physique, ces première et seconde valeurs connues de la grandeur physique étant situées de part et d'autre d'une valeur médiane de la grandeur physique,
**caractérisé en ce que** :
- lors de l'étape a), le pas du réseau de Bragg réalisé est configuré pour que le spectre de puissance de ce réseau de Bragg présente au moins dix harmoniques d'ordre supérieur à cent à l'intérieur d'une plage de travail comprise entre 200 nm et 10000 nm, chacun de ces harmoniques étant situé à une longueur d'onde respective λₖ, où k est le numéro d'ordre de cet harmonique, et
- le procédé comporte aussi les étapes suivantes :
c) lorsque la valeur de la grandeur physique est la première valeur connue, la mesure (184) d'une première valeur de la longueur d'onde λₖ de chacun des harmoniques situés à l'intérieur de la plage de travail, puis
d) lorsque la valeur de la grandeur physique est la seconde valeur, la mesure (188) d'une seconde valeur de la longueur d'onde λₖ de chacun de ces harmoniques situés à l'intérieur de la plage de travail, puis
e) la détermination (190) de la valeur de la sensibilité S_{G} pour la valeur médiane de la grandeur physique à partir de l'écart entre les première et seconde valeurs de la grandeur physique et à partir des première et seconde valeurs mesurées pour chaque longueur d'onde λₖ.

10. Procédé selon la revendication 9, dans lequel le procédé comporte :
- la réitération des étapes b) à e) en remplaçant les première et seconde valeurs de la grandeur physique par d'autres valeurs différentes de la grandeur physique afin de déterminer la sensibilité S_{G} pour plusieurs valeurs médianes différentes de la grandeur physique, ces valeurs médianes de la grandeur physique étant réparties sur une plage d'utilisation prédéterminée, puis
- la construction (198), sur la plage d'utilisation, d'une loi d'évolution de la valeur de la sensibilité S_{G} en fonction de la valeur de la grandeur physique.

11. Procédé selon l'une quelconque des revendications 9 à 10, dans lequel, lors de l'étape e) (190), la valeur de la la sensibilité S_{G} est prise égale à une valeur S_{G,d} qui minimise la somme de tous les écarts S_{G,d,k} - S_{G,d}, où S_{G,d,k} est une valeur grossière de la sensibilité S_{G} calculée à partir de l'écart entre les première et seconde valeurs de la grandeur physique et seulement à partir des première et seconde valeurs mesurées pour l'harmonique d'ordre k.

12. Procédé de calibration d'un dispositif de mesure d'une grandeur physique G qui varie à l'intérieur d'une plage d'utilisation prédéterminée, ce dispositif comportant :
- un guide d'onde contenant un cœur qui s'étend le long d'un axe longitudinal et à l'intérieur duquel un signal optique guidé par ce guide d'onde est apte à se propager le long de l'axe longitudinal du guide d'onde,
- un réseau de Bragg réalisé dans le cœur du guide d'onde, ce réseau de Bragg comportant un spectre de puissance en réflexion présentant au moins un pic de puissance à une longueur d'onde λ qui varie en fonction de la grandeur physique à mesurer de sorte qu'une variation de cette longueur d'onde est représentative d'une variation de la valeur de cette grandeur physique,
**caractérisé en ce que** le procédé comporte les étapes suivantes :
1) l'enregistrement d'une loi d'évolution de la valeur d'une sensibilité S_{G} du guide d'onde en fonction de la grandeur physique à mesurer, cette loi d'évolution associant une valeur de la sensibilité S_{G} à chaque valeur de la grandeur physique à mesurer contenue dans la plage d'utilisation prédéterminée et cette loi d'évolution étant construite en mettant en œuvre un procédé de mesure de la sensibilité S_{G} conforme à l'une quelconque des revendications 9 à 11,
2) l'acquisition (102) d'une valeur λ_{B,0} de référence de la longueur d'onde réfléchie par le réseau de Bragg lorsque la valeur de la grandeur physique est égale à une valeur connue G₀ de référence, puis
3) le calcul (104), pour chacune des valeurs Gᵢ contenues dans un ensemble prédéterminé de plusieurs valeurs Gᵢ choisies à l'intérieur de la plage d'utilisation, d'une valeur correspondante λᵢ de la longueur d'onde λ à l'aide de la relation suivante : (λᵢ - λᵣ)/λᵣ = S_{G,i}*(Gᵢ-Gᵣ), où :
- S_{G,i} est la valeur de la sensibilité S_{G} du guide d'onde associée à la valeur choisie Gᵢ par la loi d'évolution enregistrée, et
- λᵣ est la valeur de la longueur d'onde λ lorsque la valeur de la grandeur physique G est égale à une valeur Gᵣ connue, puis
4) à partir des valeurs Gᵢ, des valeurs λᵢ calculées pour chacune de ces valeurs Gᵢ et des valeurs λ_{B,0} et G₀ de référence acquises, la construction (106) d'une loi d'étalonnage qui associe à chaque valeur de la longueur d'onde λ, une valeur correspondante de la grandeur physique.

13. Procédé selon la revendication 12, dans lequel le procédé comporte l'enregistrement (106) de la loi d'étalonnage construite dans une mémoire du dispositif de mesure de la grandeur physique G en tant que loi d'étalonnage utilisée, par ce dispositif de mesure, pour établir la valeur de la grandeur physique mesurée à partir d'une valeur déterminée de la longueur d'onde λ.

14. Procédé selon la revendication 13, dans lequel le procédé comporte après plusieurs mesures de la grandeur physique par le dispositif de mesure, la réitération des étapes 2) à 6) pour construire une nouvelle loi d'étalonnage puis l'enregistrement de cette nouvelle loi d'étalonnage dans la mémoire du dispositif de mesure de la grandeur physique G en tant que loi d'étalonnage utilisée, par ce dispositif de mesure, pour convertir chaque nouvelle valeur mesurée de la longueur d'onde λ en une valeur mesurée de la grandeur physique.

15. Procédé selon l'une quelconque des revendications 12 à 14, dans lequel :
- pour les valeurs de l'indice i supérieure à zéro, le calcul de la valeur λᵢ à l'aide de la relation (λᵢ - λᵣ)/λᵣ = S_{G,i}*(Gᵢ-Gᵣ) est réalisé en prenant les valeurs λᵣ et Gᵣ égales, respectivement, à des valeurs λᵢ₋₁ et Gᵢ₋₁, où λᵢ₋₁ est une valeur précédemment calculée correspondant à la valeur Gᵢ₋₁ la plus proche de de la valeur Gᵢ, et
- pour l'indice i égal à zéro, les valeurs λᵢ et Gᵢ sont égales, respectivement, aux valeurs λ_{B,0} et G₀ acquises.

16. Dispositif de mesure d'une grandeur physique G qui varie à l'intérieur d'une plage d'utilisation prédéterminée, ce dispositif comportant :
- un guide (14) d'onde contenant un cœur qui s'étend le long d'un axe longitudinal et à l'intérieur duquel un signal optique guidé par ce guide d'onde est apte à se propager le long de l'axe longitudinal du guide d'onde,
- un réseau (4) de Bragg réalisé dans le cœur du guide d'onde, ce réseau de Bragg comportant un spectre de puissance en réflexion présentant au moins un pic de puissance à une longueur d'onde λ qui varie en fonction de la grandeur physique à mesurer de sorte qu'une variation de cette longueur d'onde est représentative d'une variation de la valeur de cette grandeur physique,
- un analyseur spectral (20) comportant une mémoire (74) dans laquelle est enregistrée une loi d'étalonnage (76) qui associe à chaque valeur de la longueur d'onde λ, une valeur correspondante de la grandeur physique, cet analyseur spectral étant apte :
- à mesurer la réponse spectrale du réseau de Bragg, puis
- à déterminer la valeur de la longueur d'onde λ du réseau de Bragg à partir de la réponse spectrale mesurée, puis
- à établir la valeur de la grandeur physique mesurée à partir de la valeur déterminée de la longueur d'onde λ en utilisant la loi d'étalonnage enregistrée,
**caractérisé en ce que** :
- la mémoire (74) de l'analyseur spectral (20) contient également :
- une loi d'évolution (S_{G}(G)) de la valeur d'une sensibilité S_{G} du guide d'onde, cette loi d'évolution associant une valeur de la sensibilité S_{G} à chaque valeur de la grandeur physique à mesurer contenue dans la plage d'utilisation prédéterminée et cette loi d'évolution étant construite en mettant en œuvre un procédé de mesure de la sensibilité S_{G} conforme à l'une quelconque des revendications 9 à 11, et
- une valeur λ_{B,0} de référence de la longueur d'onde réfléchie par le réseau de Bragg lorsque la valeur de la grandeur physique est égale à une valeur connue G₀ de référence, et
- l'analyseur spectral est configuré pour :
- calculer, pour chacune des valeurs Gᵢ contenues dans un ensemble prédéterminé de plusieurs valeurs Gᵢ choisies à l'intérieur de la plage d'utilisation prédéterminée, une valeur correspondante λᵢ de la longueur d'onde λ à l'aide de la relation suivante : (λᵢ - λᵣ)/λᵣ = S_{G,i}*(Gᵢ-Gᵣ), où :
- S_{G,i} est la valeur de la sensibilité S_{G} du guide d'onde associée à la valeur choisie Gᵢ par la loi d'évolution enregistrée, et
- λᵣ est la valeur de la longueur d'onde λ lorsque la valeur de la grandeur physique G est égale à une valeur Gᵣ connue, puis
- à partir des valeurs Gᵢ, des valeurs λᵢ calculées pour chacune de ces valeurs Gᵢ et des valeurs λ_{B,0} et G₀ contenues dans sa mémoire, construire la loi d'étalonnage, puis
- enregistrer la loi d'étalonnage construite dans la mémoire en tant que loi d'étalonnage utilisée pour établir la valeur de la grandeur physique mesurée à partir de la valeur déterminée de la longueur d'onde λ.

## Patentansprüche

1. Vorrichtung zum Messen der Empfindlichkeit S_{G} eines Wellenleiters gegenüber einer Variation ΔG einer physikalischen Größe G, wobei die Empfindlichkeit S_{G} für einen gegebenen Wert der physikalischen Größe G durch die folgende Gleichung Δλ_{B}/λ_{B} = S_{G}*ΔG definiert ist, wobei:
- λ_{B} die Grundwellenlänge eines in diesem Wellenleiter ausgeführten Bragg-Gitters ist,
- Δλ_{B} die Variation der Grundwellenlänge des Bragg-Gitters ist, die als Reaktion auf die Variation ΔG der physikalischen Größe erhalten wird, und
- ΔG eine unendliche Variation des Werts der physikalischen Größe G um den gegebenen Wert der physikalischen Größe G ist,
wobei diese Vorrichtung umfasst:
- ein Bragg-Gitter (124), das innerhalb des Wellenleiters ausgeführt ist, wobei dieses Bragg-Gitter mindestens drei identische Muster umfasst, die entlang einer Längsachse des Wellenleiters hintereinander ausgerichtet sind und durch eine konstante Teilung voneinander getrennt sind,
- eine Ausrüstung (126), die in der Lage ist, das Bragg-Gitter einem ersten bekannten Wert der physikalischen Größe und dann einem zweiten bekannten Wert der physikalischen Größe auszusetzen, wobei diese ersten und zweiten bekannten Werte der physikalischen Größe beidseits eines Medianwerts der physikalischen Größe liegen, und
- einen Spektralanalysator (20), der in der Lage ist, in einem vorbestimmten Arbeitsbereich zwischen 200 nm und 10000 nm den Wert der Wellenlänge zu erfassen, bei dem ein Leistungspeak in dem Reflexionsleistungsspektrum des Bragg-Gitters auftritt, **dadurch gekennzeichnet, dass**:
- die Teilung des Bragg-Gitters (124) so ausgelegt ist, dass das Leistungsspektrum dieses Bragg-Gitters mindestens zehn Harmonische einer Ordnung größer als hundert innerhalb des Arbeitsbereichs aufweist, wobei jede dieser Harmonischen bei einer jeweiligen Wellenlänge λₖ liegt, wobei k die Ordnungsnummer dieser Harmonischen ist,
- der Spektralanalysator (20) dazu ausgelegt ist, die folgenden Schritte auszuführen:
- wenn der Wert der physikalischen Größe der erste bekannte Wert ist, das Messen eines ersten Werts der Wellenlänge λₖ jeder der Harmonischen, die innerhalb des Arbeitsbereichs liegen, dann
- wenn der Wert der physikalischen Größe der zweite Wert ist, das Messen eines zweiten Werts der Wellenlänge λₖ jeder dieser Harmonischen, die innerhalb des Arbeitsbereichs liegen, dann
- das Bestimmen des Werts der Empfindlichkeit S_{G} für den Medianwert der physikalischen Größe ausgehend von der Differenz zwischen den ersten und zweiten Werten der physikalischen Größe und ausgehend von den ersten und zweiten Messwerten für jede Wellenlänge λₖ.

2. Vorrichtung nach Anspruch 1, wobei der Wellenleiter eine optische Faser ist.

3. Vorrichtung nach einem der vorhergehenden Ansprüche, wobei:
- jedes Muster (M₁, M₂, M_{N-1}, M_{N}) des Bragg-Gitters sich hauptsächlich in einer als "Ebene des Musters" bezeichneten Ebene senkrecht zur Längsachse des Wellenleiters erstreckt, und
- jedes Muster aus einer oder mehreren in der Ebene des Musters nebeneinander angeordneten Blasen (B₁ - B₆) besteht, und
- die Fläche der orthogonalen Projektion aller Blasen des Musters auf die Ebene des Musters weniger als 50 % der Fläche des Querschnitts des Kerns (154) des Wellenleiters beträgt.

4. Vorrichtung nach Anspruch 3, wobei jedes Muster aus mehreren disjunkten Blasen (B₁ - B₆) besteht, die in der Ebene des Musters nebeneinander angeordnet sind.

5. Vorrichtung nach einem der vorhergehenden Ansprüche, wobei:
- die Teilung des Bragg-Gitters größer oder gleich 20 µm ist, und
- die Differenz zwischen dem Brechungsindex des Kerns des Wellenleiters und dem Brechungsindex jedes Musters des Bragg-Gitters größer als 0,3 ist.

6. Vorrichtung nach einem der vorhergehenden Ansprüche, wobei jedes Muster (M₁, M₂, M_{N-1}, M_{N}) mithilfe eines Impulses eines Femtosekundenlasers ausgeführt ist.

7. Vorrichtung nach einem der vorhergehenden Ansprüche, wobei die physikalische Größe aus der Gruppe gewählt ist, die aus einer Temperatur, einer mechanischen Verformung und einem hydrostatischen Druck besteht.

8. Vorrichtung nach einem der vorhergehenden Ansprüche, wobei der vorbestimmte Arbeitsbereich zwischen 200 nm und 5000 nm liegt.

9. Verfahren zum Messen der Empfindlichkeit S_{G} eines Wellenleiters gegenüber einer Variation ΔG einer physikalischen Größe G, wobei die Empfindlichkeit S_{G} für einen gegebenen Wert der physikalischen Größe G durch die folgende GleichungΔλ_{B}/λ_{B} = S_{G}*ΔG definiert ist, wobei:
- λ_{B} die Grundwellenlänge eines in diesem Wellenleiter ausgeführten Bragg-Gitters ist,
- Δλ_{B} die Variation der Grundwellenlänge des Bragg-Gitters ist, die als Reaktion auf die Variation ΔG der physikalischen Größe erhalten wird, und
- ΔG eine unendliche Variation des Werts der physikalischen Größe G um den gegebenen Wert der physikalischen Größe G ist,
wobei dieses Verfahren die folgenden Schritte umfasst:
a) Ausführen eines Bragg-Gitters (162) innerhalb des Wellenleiters, wobei dieses Bragg-Gitter mindestens drei identische Muster umfasst, die entlang einer Längsachse des Wellenleiters hintereinander ausgerichtet sind und durch eine konstante Teilung voneinander getrennt sind,
b) Aussetzen (182, 186) des Bragg-Gitters gegenüber einem ersten bekannten Wert der physikalischen Größe und dann gegenüber einem zweiten bekannten Wert der physikalischen Größe, wobei diese ersten und zweiten bekannten Werte der physikalischen Größe beidseits eines Medianwerts der physikalischen Größe liegen,
**dadurch gekennzeichnet, dass**:
- beim Schritt a) die Teilung des ausgeführten Bragg-Gitters so ausgelegt ist, dass das Leistungsspektrum dieses Bragg-Gitters mindestens zehn Harmonische einer Ordnung größer als hundert innerhalb eines Arbeitsbereichs zwischen 200 nm und 10000 nm aufweist, wobei jede dieser Harmonischen bei einer jeweiligen Wellenlänge λₖ liegt, wobei k die Ordnungsnummer dieser Harmonischen ist,
- wobei das Verfahren auch die folgenden Schritte umfasst:
c) wenn der Wert der physikalischen Größe der erste bekannte Wert ist, das Messen (184) eines ersten Werts der Wellenlänge λₖ jeder der Harmonischen, die innerhalb des Arbeitsbereichs liegen, dann
d) wenn der Wert der physikalischen Größe der zweite Wert ist, das Messen (188) eines zweiten Werts der Wellenlänge λₖ jeder dieser Harmonischen, die innerhalb des Arbeitsbereichs liegen, dann
e) das Bestimmen (190) des Werts der Empfindlichkeit S_{G} für den Medianwert der physikalischen Größe ausgehend von der Differenz zwischen den ersten und zweiten Werten der physikalischen Größe und ausgehend von den ersten und zweiten Messwerten für jede Wellenlänge λₖ.

10. Verfahren nach Anspruch 9, wobei das Verfahren umfasst:
- das Wiederholen der Schritte b) bis e), wobei die ersten und zweiten Werte der physikalischen Größe durch andere unterschiedliche Werte der physikalischen Größe ersetzt werden, um die Empfindlichkeit S_{G} für mehrere unterschiedliche Medianwerte der physikalischen Größe zu bestimmen, wobei diese Medianwerte der physikalischen Größe über einen vorbestimmten Verwendungsbereich verteilt sind, dann
- das Erstellen (198), über den Verwendungsbereich, eines Evolutionsgesetzes für den Wert der Empfindlichkeit S_{G} in Abhängigkeit von dem Wert der physikalischen Größe.

11. Verfahren nach einem der Ansprüche 9 bis 10, wobei beim Schritt e) (190) der Wert der Empfindlichkeit S_{G} gleich einem Wert S_{G,d} gewählt wird, der die Summe aller Differenzen S_{G,d,k} - S_{G,d} minimiert, wobei S_{G,d,k} ein grober Wert der Empfindlichkeit S_{G} ist, der ausgehend von der Differenz zwischen den ersten und zweiten Werten der physikalischen Größe und nur ausgehend von den ersten und zweiten Messwerten für die Harmonische der Ordnung k berechnet wird.

12. Verfahren zum Kalibrieren einer Vorrichtung zum Messen einer physikalischen Größe G, die innerhalb eines vorbestimmten Verwendungsbereichs variiert, wobei diese Vorrichtung umfasst:
- einen Wellenleiter, der einen Kern enthält, der sich entlang einer Längsachse erstreckt und in dem sich ein von diesem Wellenleiter geführtes optisches Signal entlang der Längsachse des Wellenleiters ausbreiten kann,
- ein Bragg-Gitter, das in dem Kern des Wellenleiters ausgeführt ist, wobei dieses Bragg-Gitter ein Reflexionsleistungsspektrum umfasst, das mindestens einen Leistungspeak bei einer Wellenlänge λ aufweist, die in Abhängigkeit von der zu messenden physikalischen Größe variiert, so dass eine Variation dieser Wellenlänge repräsentativ für eine Variation des Werts dieser physikalischen Größe ist,
**dadurch gekennzeichnet, dass** das Verfahren die folgenden Schritte umfasst:
1) Aufzeichnen eines Evolutionsgesetzes für den Wert einer Empfindlichkeit S_{G} des Wellenleiters in Abhängigkeit von der zu messenden physikalischen Größe, wobei dieses Evolutionsgesetz jedem Wert der zu messenden physikalischen Größe, der in dem vorbestimmten Verwendungsbereich enthalten ist, einen Wert der Empfindlichkeit S_{G} zuordnet, und wobei dieses Evolutionsgesetz erstellt wird, indem ein Verfahren zum Messen der Empfindlichkeit S_{G} nach einem der Ansprüche 9 bis 11 implementiert wird,
2) Erfassen (102) eines Referenzwerts λ_{B,0} der Wellenlänge, die von dem Bragg-Gitter reflektiert wird, wenn der Wert der physikalischen Größe gleich einem bekannten Referenzwert G₀ ist, dann
3) Berechnen (104), für jeden der Werte Gᵢ, die in einer vorbestimmten Menge von mehreren Werten Gᵢ enthalten sind, die innerhalb des Verwendungsbereichs ausgewählt sind, eines entsprechenden Werts λᵢ der Wellenlänge λ mithilfe der folgenden Gleichung: (λᵢ - λᵣ)/λᵣ = S_{G},ᵢ*(Gᵢ-Gᵣ), wobei:
- S_{G,i} der Wert der Empfindlichkeit S_{G} des Wellenleiters ist, der dem gewählten Wert Gᵢ durch das aufgezeichnete Evolutionsgesetz zugeordnet wird, und
- λᵣ der Wert der Wellenlänge λ ist, wenn der Wert der physikalischen Größe G gleich einem bekannten Wert Gᵣ ist, dann
4) ausgehend von den Werten Gᵢ, von den für jeden dieser Werte Gᵢ berechneten Werten λᵢ und von den erfassten Referenzwerten_{B,0} und G₀, das Erstellen (106) eines Kalibrierungsgesetzes, das jedem Wert der Wellenlänge λ einen entsprechenden Wert der physikalischen Größe zuordnet.

13. Verfahren nach Anspruch 12, wobei das Verfahren das Aufzeichnen (106) des erstellten Kalibrierungsgesetzes in einem Speicher der Vorrichtung zum Messen der physikalischen Größe G als das Kalibrierungsgesetz umfasst, das von dieser Messvorrichtung verwendet wird, um den Wert der gemessenen physikalischen Größe ausgehend von einem bestimmten Wert der Wellenlänge λ zu ermitteln.

14. Verfahren nach Anspruch 13, wobei das Verfahren nach mehreren Messungen der physikalischen Größe durch die Messvorrichtung das Wiederholen der Schritte 2) bis 6) umfasst, um ein neues Kalibrierungsgesetz zu erstellen, dann das Aufzeichnen dieses neuen Kalibrierungsgesetzes in dem Speicher der Vorrichtung zum Messen der physikalischen Größe G als das Kalibrierungsgesetz, das von dieser Messvorrichtung verwendet wird, um jeden neuen Messwert der Wellenlänge λ in einen Messwert der physikalischen Größe umzuwandeln.

15. Verfahren nach einem der Ansprüche 12 bis 14, wobei:
- für die Werte des Index i größer Null das Berechnen des Werts λᵢ mithilfe der Gleichung (λᵢ - λᵣ)/λᵣ = S_{G,i}*(Gᵢ-Gᵣ) ausgeführt wird, indem die Werte λᵣ und Gᵣ gleich Werten λᵢ₋₁ bzw. G ᵢ₋₁ gewählt werden, wobei λᵢ₋₁ ein zuvor berechneter Wert ist, der dem Wert Gᵢ₋₁ entspricht, der dem Wert Gᵢ am nächsten liegt, und
- für den Index i gleich Null die Werte λᵢ und Gᵢ gleich den erfassten Werten λ_{b,0} bzw. G₀ sind.

16. Vorrichtung zum Messen einer physikalischen Größe G, die innerhalb eines vorbestimmten Verwendungsbereichs variiert, wobei diese Vorrichtung umfasst:
- einen Wellenleiter (14), der einen Kern enthält, der sich entlang einer Längsachse erstreckt und in dem sich ein von diesem Wellenleiter geführtes optisches Signal entlang der Längsachse des Wellenleiters ausbreiten kann,
- ein Bragg-Gitter (4), das in dem Kern des Wellenleiters ausgeführt ist, wobei dieses Bragg-Gitter ein Reflexionsleistungsspektrum umfasst, das mindestens einen Leistungspeak bei einer Wellenlänge λ aufweist, die in Abhängigkeit von der zu messenden physikalischen Größe variiert, so dass eine Variation dieser Wellenlänge repräsentativ für eine Variation des Werts dieser physikalischen Größe ist,
- einen Spektralanalysator (20), der einen Speicher (74) umfasst, in dem ein Kalibrierungsgesetz (76) aufgezeichnet ist, das jedem Wert der Wellenlänge λ einen entsprechenden Wert der physikalischen Größe zuordnet, wobei dieser Spektralanalysator in der Lage ist:
- die spektrale Antwort des Bragg-Gitters zu messen, dann
- ausgehend von der gemessenen spektralen Antwort den Wert der Wellenlänge λ des Bragg-Gitters zu bestimmen, dann
- den Wert der gemessenen physikalischen Größe ausgehend von dem bestimmten Wert der Wellenlänge λ unter Verwendung des aufgezeichneten Kalibriergesetzes zu ermitteln,
**dadurch gekennzeichnet, dass**:
- der Speicher (74) des Spektralanalysators (20) auch enthält:
- ein Evolutionsgesetz (S_{G}(G)) für den Wert einer Empfindlichkeit S_{G} des Wellenleiters, wobei dieses Evolutionsgesetz jedem Wert der zu messenden physikalischen Größe, der in dem vorbestimmten Verwendungsbereich enthalten ist, einen Wert der Empfindlichkeit S_{G} zuordnet, und wobei dieses Evolutionsgesetz erstellt wird, indem ein Verfahren zum Messen der Empfindlichkeit S_{G} nach einem der Ansprüche 9 bis 11 implementiert wird, und
- einen Referenzwert λ_{B,0} der Wellenlänge, die von dem Bragg-Gitter reflektiert wird, wenn der Wert der physikalischen Größe gleich einem bekannten Referenzwert G₀ ist, und
- der Spektralanalysator dazu ausgelegt ist:
- für jeden der Werte Gᵢ, die in einer vorbestimmten Menge von mehreren Werten Gᵢ enthalten sind, die innerhalb des Verwendungsbereichs ausgewählt sind, einen entsprechenden Wert λᵢ der Wellenlänge λ mithilfe der folgenden Gleichung zu berechnen: (λᵢ - λᵣ)/λᵣ = S_{G,i}*(Gᵢ-Gᵣ), wobei:
- S_{G,i} der Wert der Empfindlichkeit S_{G} des Wellenleiters ist, der dem gewählten Wert Gᵢ durch das aufgezeichnete Evolutionsgesetz zugeordnet wird, und
- λᵣ der Wert der Wellenlänge λ ist, wenn der Wert der physikalischen Größe G gleich einem bekannten Wert Gᵣ ist, dann
- ausgehend von den Werten Gᵢ, den für jeden dieser Werte Gᵢ berechneten Werten λᵢ und den in seinem Speicher enthaltenen Werten λ_{B,0} und G₀ das Kalibrierungsgesetz zu erstellen, dann
- das in dem Speicher erstellte Kalibrierungsgesetz als das Kalibrierungsgesetz aufzeichnen, das verwendet wird, um den Wert der gemessenen physikalischen Größe ausgehend von dem bestimmten Wert der Wellenlänge λ zu ermitteln.

## Claims

1. Device for measuring the sensitivity S_{G} of a waveguide to a variation ΔG of a physical quantity G, the sensitivity S_{G} for a given value of the physical quantity G being defined by the following relationship: Δλ_{B}/λ_{B} = S_{g}*ΔG, where:
- λ_{B} is the fundamental wavelength of a Bragg grating formed in this waveguide,
- Δλ_{B} is the variation of the fundamental wavelength of the Bragg grating obtained in response to the variation ΔG of the physical quantity, and
- ΔG is an infinitesimal variation of the value of the physical quantity G around the given value of the physical quantity G,
this device comprising:
- a Bragg grating (124) produced within the waveguide, this Bragg grating comprising at least three identical patterns aligned behind one another along a longitudinal axis of the waveguide and separated from one another by a constant pitch,
- an apparatus (126) capable of exposing the Bragg grating to a first known value of the physical quantity and then to a second known value of the physical quantity, these first and second known values of the physical quantity being situated on either side of a median value of the physical quantity, and
- a spectral analyser (20) capable of recording, in a predetermined working range between 200 nm and 10000 nm, the value of the wavelength at which a power peak occurs in the reflected power spectrum of the Bragg grating, **characterized in that**:
- the pitch of the Bragg grating (124) is configured so that the power spectrum of this Bragg grating has at least ten harmonics of order greater than one hundred within the working range, each of these harmonics being situated at a respective wavelength λₖ, where k is the order number of this harmonic,
- the spectral analyser (20) is configured to carry out the following steps:
- when the value of the physical quantity is the first known value, measuring a first value of the wavelength λₖ of each of the harmonics situated within the working range, and then,
- when the value of the physical quantity is the second value, measuring a second value of the wavelength λₖ of each of these harmonics situated within the working range, and then
- determining the value of the sensitivity S_{G} for the median value of the physical quantity on the basis of the difference between the first and second values of the physical quantity and on the basis of the first and second measured values for each wavelength λₖ.

2. Device according to Claim 1, wherein the waveguide is an optical fibre.

3. Device according to either one of the preceding claims, wherein:
- each pattern (M₁, M₂, M_{N-1}, M_{N}) of the Bragg grating extends primarily in a plane, referred to as "plane of the pattern", perpendicular to the longitudinal axis of the waveguide, and
- each pattern consists of one or more bubbles (B₁ - B₆) arranged next to one another in the plane of the pattern, and
- the surface area of the orthogonal projection of all of the bubbles of the pattern onto the plane of the pattern is less than 50% of the surface area of the cross section of the core (154) of the waveguide.

4. Device according to Claim 3, wherein each pattern consists of multiple disjoint bubbles (B₁ - B₆) arranged next to one another in the plane of the pattern.

5. Device according to any one of the preceding claims, wherein:
- the pitch of the Bragg grating is greater than or equal to 20 µm, and
- the difference between the refractive index of the core of the waveguide and the refractive index of each pattern of the Bragg grating is greater than 0.3.

6. Device according to any one of the preceding claims, wherein each pattern (M₁, M₂, M_{N-1}, M_{N}) is formed using a femtosecond laser pulse.

7. Device according to any one of the preceding claims, wherein the physical quantity is chosen from the group consisting of a temperature, a mechanical deformation and a hydrostatic pressure.

8. Device according to any one of the preceding claims, wherein the predetermined working range is between 200 nm and 5000 nm.

9. Method for measuring the sensitivity S_{G} of a waveguide to a variation ΔG of a physical quantity G, the sensitivity S_{G} for a given value of the physical quantity G being defined by the following relationship:Δλ_{B}/_{B} = S_{g}*ΔG, where:
- λ_{B} is the fundamental wavelength of a Bragg grating formed in the waveguide,
- Δλ_{B} is the variation of the fundamental wavelength of the Bragg grating obtained in response to the variation ΔG of the physical quantity, and
- ΔG is an infinitesimal variation of the value of the physical quantity G around the given value of the physical quantity G,
this method comprising the following steps:
a) producing (162) a Bragg grating within the waveguide, this Bragg grating comprising at least three identical patterns aligned behind one another along a longitudinal axis of the waveguide and separated from one another by a constant pitch,
b) exposing (182, 186) the Bragg grating to a first known value of the physical quantity and then to a second known value of the physical quantity, these first and second known values of the physical quantity being situated on either side of a median value of the physical quantity,
**characterized in that**:
- in step a), the pitch of the produced Bragg grating is configured so that the power spectrum of this Bragg grating has at least ten harmonics of order greater than one hundred within a working range between 200 nm and 10000 nm, each of these harmonics being situated at a respective wavelength λₖ, where k is the order number of this harmonic, and
- the method also comprises the following steps:
c) when the value of the physical quantity is the first known value, measuring (184) a first value of the wavelength λₖ of each of the harmonics situated within the working range, and then,
d) when the value of the physical quantity is the second value, measuring (188) a second value of the wavelength λₖ of each of these harmonics situated within the working range, and then
e) determining (190) the value of the sensitivity S_{G} for the median value of the physical quantity on the basis of the difference between the first and second values of the physical quantity and on the basis of the first and second measured values for each wavelength λₖ.

10. Method according to Claim 9, wherein the method comprises:
- reiterating steps b) to e) while replacing the first and second values of the physical quantity with other, different values of the physical quantity in order to determine the sensitivity S_{G} for multiple different median values of the physical quantity, these median values of the physical quantity being distributed over a predetermined range of use, and then
- constructing (198), over the range of use, an evolution law concerning the evolution of the value of the sensitivity S_{G} as a function of the value of the physical quantity.

11. Method according to either one of Claims 9 and 10, wherein, in step e) (190), the value of the sensitivity S_{G} is taken to be equal to a value S_{G,d} that minimizes the sum of all of the differences S_{G,d,k} - S_{G,d}, where S_{G,d,k} is a rough value of the sensitivity S_{G} calculated on the basis of the difference between the first and second values of the physical quantity and only on the basis of the first and second measured values for the harmonic of order k.

12. Method for calibrating a device for measuring a physical quantity G that varies within a predetermined range of use, this device comprising:
- a waveguide containing a core that extends along a longitudinal axis and within which an optical signal guided by this waveguide is capable of propagating along the longitudinal axis of the waveguide,
- a Bragg grating produced in the core of the waveguide, this Bragg grating comprising a reflected power spectrum having at least one power peak at a wavelength λ that varies as a function of the physical quantity to be measured, such that a variation of this wavelength is representative of a variation of the value of this physical quantity,
**characterized in that** the method comprises the following steps:
1) recording an evolution law concerning the evolution of the value of a sensitivity S_{G} of the waveguide as a function of the physical quantity to be measured, this evolution law associating a value of the sensitivity S_{G} with each value of the physical quantity to be measured contained in the predetermined range of use, and this evolution law being constructed by implementing a method for measuring sensitivity S_{G} according to any one of Claims 9 to 11,
2) acquiring (102) a reference valueλ_{B,0} of the wavelength reflected by the Bragg grating when the value of the physical quantity is equal to a known reference value G₀, and then
3) calculating (104), for each of the values Gᵢ contained in a predetermined set of multiple chosen values Gᵢ within the range of use, a corresponding value λᵢ of the wavelength λ using the following relationship: (λᵢ - λᵣ)/λᵣ = S_{G},ᵢ*(Gᵢ-Gᵣ), where:
- S_{G,i} is the value of the sensitivity S_{G} of the waveguide associated with the chosen value Gᵢ by the recorded evolution law, and
- λᵣ is the value of the wavelength λ when the value of the physical quantity G is equal to a known value Gᵣ, and then
4) on the basis of the values Gᵢ, the values λᵢ calculated for each of these values Gᵢ and the acquired reference values λ_{B,0} and G₀, constructing (106) a calibration law that associates, with each value of the wavelength λ, a corresponding value of the physical quantity.

13. Method according to Claim 12, wherein the method comprises recording (106) the constructed calibration law in a memory of the device for measuring the physical quantity G as a calibration law used, by this measuring device, to establish the value of the measured physical quantity on the basis of a determined value of the wavelength λ.

14. Method according to Claim 13, wherein the method comprises, after multiple measurements of the physical quantity by the measuring device, reiterating steps 2) to 6) in order to construct a new calibration law and then recording this new calibration law in the memory of the device for measuring the physical quantity G as a calibration law used, by this measuring device, to convert each new measured value of the wavelength λ into a measured value of the physical quantity.

15. Method according to any one of Claims 12 to 14, wherein:
- for values of the index i greater than zero, the value λᵢ is calculated using the relationship (λᵢ - λᵣ)/λᵣ = S_{G,i}*(Gᵢ-Gᵣ) by adopting values λᵣ and Gᵣ that are equal, respectively, to values λᵢ₋₁ and Gᵢ₋₁, where λᵢ₋₁ is a previously calculated value corresponding to the value Gᵢ₋₁ closest to the value Gᵢ, and
- for the index i equal to zero, the values λᵢ and Gᵢ are equal, respectively, to the acquired values λ_{b,0} and G₀.

16. Device for measuring a physical quantity G that varies within a predetermined range of use, this device comprising:
- a waveguide (14) containing a core that extends along a longitudinal axis and within which an optical signal guided by this waveguide is capable of propagating along the longitudinal axis of the waveguide,
- a Bragg grating (4) produced in the core of the waveguide, this Bragg grating comprising a reflected power spectrum having at least one power peak at a wavelength λ that varies as a function of the physical quantity to be measured, such that a variation of this wavelength is representative of a variation of the value of this physical quantity,
- a spectral analyser (20) comprising a memory (74) in which there is recorded a calibration law (76) that associates, with each value of the wavelength λ, a corresponding value of the physical quantity, this spectral analyser being capable of:
- measuring the spectral response of the Bragg grating, and then
- determining the value of the wavelength λ of the Bragg grating on the basis of the measured spectral response, and then
- establishing the value of the measured physical quantity on the basis of the determined value of the wavelength λ using the recorded calibration law,
**characterized in that**:
- the memory (74) of the spectral analyser (20) also contains:
- an evolution law (S_{G}(G)) concerning the evolution of the value of a sensitivity S_{G} of the waveguide, this evolution law associating a value of the sensitivity S_{G} with each value of the physical quantity to be measured contained in the predetermined range of use, and this evolution law being constructed by implementing a method for measuring sensitivity S_{G} according to any one of Claims 9 to 11, and
- a reference value λ_{B,0} of the wavelength reflected by the Bragg grating when the value of the physical quantity is equal to a known reference value G₀, and
- the spectral analyser is configured to:
- calculate, for each of the values Gᵢ contained in a predetermined set of multiple chosen values Gᵢ within the predetermined range of use, a corresponding value λᵢ of the wavelength λ using the following relationship: (λᵢ - λᵣ)/λᵣ = S_{G,i}*(Gᵢ-Gᵣ), where:
- S_{G,i} is the value of the sensitivity S_{G} of the waveguide associated with the chosen value Gᵢ by the recorded evolution law, and
- λᵣ is the value of the wavelength λ when the value of the physical quantity G is equal to a known value Gᵣ, and then
- construct the calibration law on the basis of the values Gᵢ, the values λᵢ calculated for each of these values Gᵢ and the values λ_{B,0} and G₀ contained in its memory, and then
- record the constructed calibration law in the memory as a calibration law used to establish the value of the measured physical quantity on the basis of the determined value of the wavelength λ.
